# EUROPEAN PATENT APPLICATION

(11) **EP 3 715 432 A1**
(43) Date of publication of application: **30.09.2020**
(21) Application number: 19165510.9
(22) Date of filing: 27.03.2019
(51) Int. Cl.: C09J 133/10

(54) **PRESSURE-SENSITIVE ADHESIVE COMPOSITION WITH TRANSPARENCY CHARACTERISTICS**

(71) Applicant: 3M Innovative Properties Company, Saint Paul, MN 55133-3427 (US)
(72) Inventor: Kuester, Mr. Frank, 41453 Neuss (DE); Mechernich, Ms. Silke, 41453 Neuss (DE); Unverhau, Ms. Kerstin, 41453 Neuss (DE); Tom, Mr. Opstal, 2070 Zwijndrecht (BE)
(74) Representative: Gabriel, Kiroubagaranne

(57) **Abstract**

The present disclosure relates to a pressure sensitive adhesive composition comprising a blend of:
a) a (meth)acrylate-based (co)polymer base component; and
b) a (meth)acrylate-based copolymeric additive comprising the free-radical random copolymerization reaction product of a copolymerizable material comprising:
i. C₁-C₃₂ acrylic acid ester monomer units;
ii. greater than 10 wt.% of C₁-C₁₈ methacrylic acid ester monomer units, based on the total weight of the (meth)acrylate-based copolymeric additive; and
iii. ethylenically unsaturated monomer units having a functional group, which are copolymerizable with monomer units (i) and/or (ii);

wherein the (meth)acrylate-based copolymeric additive has a weight average molecular weight (M_{w}) greater than 10,000 Daltons and a Tg no greater than 50°C, as estimated by the Fox equation.

According to another aspect, the present disclosure is directed to a multilayer pressure sensitive adhesive assembly comprising at least a first polymer layer and a second pressure sensitive adhesive layer adjacent to the first polymer layer, wherein the second pressure sensitive adhesive layer has a composition as described above.

According to still another aspect of the present disclosure, it is provided a method for manufacturing a pressure sensitive adhesive composition as described above.

In yet another aspect, the present disclosure relates to the use of a pressure sensitive adhesive composition or multilayer pressure sensitive adhesive assembly as described above for the bonding to a medium surface energy substrate or a high surface energy substrate.

## Description

### Technical Field

The present disclosure relates generally to the field of adhesives, more specifically to the field of pressure sensitive adhesive (PSA) compositions and multilayer assemblies.

### Background

Adhesives have been used for a variety of marking, holding, protecting, sealing and masking purposes. Adhesive tapes generally comprise a backing, or substrate, and an adhesive. One type of adhesive which is particularly preferred for many applications is represented by pressure sensitive adhesives. Pressure sensitive adhesives (PSAs) are well known to one of ordinary skill in the art to possess certain properties including the following: (1) aggressive and permanent tack, (2) adherence with no more than finger pressure, (3) sufficient ability to hold onto an adhered, and (4) sufficient cohesive strength.

Materials that have been found to function well as pressure sensitive adhesives are polymers designed and formulated to exhibit the requisite viscoelastic properties resulting in a desired balance of tack, peel adhesion, and shear strength. The most commonly used polymers for preparation of pressure sensitive adhesives are various (meth)acrylate-based copolymers, natural rubber, synthetic rubbers, and silicones.

With broadened use of pressure-sensitive adhesive tapes over the years, performance requirements have become more and more demanding. Shear holding capability, for example, which originally was intended for applications supporting modest loads at room temperature, has now increased substantially for many applications in terms of operating temperature and load. Indeed, many specific applications require pressure sensitive adhesives to support a load in high stress conditions such as e.g. exposure to intense weathering conditions or under intensive usage during which the pressure-sensitive adhesive tapes are subjected to high mechanical and/or chemical stress.

When used for transparent bonding applications, such as e.g. for bonding transparent material or for applications where a transparent or colorless adhesive tape is preferred, pressure sensitive adhesive tapes have to provide operability at various challenging conditions such as exposure to a wide temperature range and ability to bond to a broad range of substrates including metal, glass and the so-called medium surface energy (MSE) plastics, such as PMMA, ABS and polycarbonate.

In modern transportation, construction, decoration, home improvement and even electronics market applications, the need to achieve transparent bonding and reduce the weight of component parts has led to increasing usage of MSE plastic materials, which are known to be challenging substrates for adhesive bonding.

The pressure sensitive adhesive materials known in the prior art for transparent bonding applications do not often provide satisfactory adhesive performance to the so-called MSE substrates. In particular, the peel force or shear resistance on these challenging-to-bond substrates, do not often fulfill the requirements, especially under environmental stress like altering temperatures and humidity. This deficiency may partly be overcome by the addition of specific additives, in particular tackifying resins, but often at the detriment of the desirable transparency characteristics. Partial solutions are described e.g. in US-A1-2018/0223132 (Nakada et al.) and in US-A1-2016/0122603 (Nakada et al.). However, the described partial solutions mainly suffer from manufacturing complexity, as they rely on the use of acrylic block copolymers made from unconventional and complex polymerization techniques.

It is therefore a recognized and continuous challenge in the adhesive tapes industry to develop pressure sensitive adhesive compositions and tapes suitable for transparent bonding applications and providing outstanding adhesion properties to difficult-to-bond MSE substrates, while maintaining satisfactory transparency characteristics.

Without contesting the technical advantages associated with the pressure sensitive adhesive compositions known in the art, there is still a need for stable and cost-effective pressure sensitive adhesive compositions and tape suitable for transparent bonding applications and having excellent transparency characteristics, while providing excellent and versatile adhesion characteristics on MSE substrates.

### Summary

According to one aspect, the present disclosure relates to a pressure sensitive adhesive composition comprising a blend of:
a) a (meth)acrylate-based (co)polymer base component; and
b) a (meth)acrylate-based copolymeric additive comprising the free-radical random copolymerization reaction product of a copolymerizable material comprising:
   i. C₁-C₃₂ acrylic acid ester monomer units;
   ii. greater than 10 wt.% of C₁-C₁₈ methacrylic acid ester monomer units, based on the total weight of the (meth)acrylate-based copolymeric additive; and
   iii. ethylenically unsaturated monomer units having a functional group, which are copolymerizable with monomer units (i) and/or (ii);
wherein the (meth)acrylate-based copolymeric additive has a weight average molecular weight (M_{w}) greater than 10,000 Daltons and a Tg no greater than 50°C, as estimated by the Fox equation.

According to another aspect, the present disclosure is directed to a multilayer pressure sensitive adhesive assembly comprising at least a first polymer layer and a second pressure sensitive adhesive layer adjacent to the first polymer layer, wherein the second pressure sensitive adhesive layer has a composition as described above.

According to still another aspect, the present disclosure is directed to an article comprising a medium surface energy substrate and a pressure sensitive adhesive composition or a multilayer pressure sensitive adhesive assembly as described above adjacent to the medium surface energy substrate.

In yet another aspect of the present disclosure, it is provided a method for manufacturing a pressure sensitive adhesive composition as described above.

According to still another aspect, the present disclosure relates to the use of a pressure sensitive adhesive composition or multilayer pressure sensitive adhesive assembly as described above for the bonding to a medium surface energy substrate or a high surface energy substrate.

### Detailed description

According to a first aspect, the present disclosure relates to a pressure sensitive adhesive composition comprising a blend of:
a) a (meth)acrylate-based (co)polymer base component; and
b) a (meth)acrylate-based copolymeric additive comprising the free-radical random copolymerization reaction product of a copolymerizable material comprising:
   i. C₁-C₃₂ acrylic acid ester monomer units;
   ii. greater than 10 wt.% of C₁-C₁₈ methacrylic acid ester monomer units, based on the total weight of the (meth)acrylate-based copolymeric additive; and
   iii. ethylenically unsaturated monomer units having a functional group, which are copolymerizable with monomer units (i) and/or (ii);
wherein the (meth)acrylate-based copolymeric additive has a weight average molecular weight (M_{w}) greater than 10,000 Daltons and a Tg no greater than 50°C, as estimated by the Fox equation.

In the context of the present disclosure, it has surprisingly been found that a pressure sensitive adhesive composition as described above, provides excellent adhesion properties, in particular with respect to peel forces, to difficult-to-bond MSE substrates, while maintaining excellent transparency characteristics.

Without wishing to be bound by theory, it is believed that this very unique combination of advantageous properties is due in particular to the presence of the (meth)acrylate-based copolymeric additive as described above, and which comprises the free-radical random copolymerization reaction product of the very specific copolymerizable material described above. This is very surprising and counter-intuitive finding in many aspects, and mainly because the skilled person would expect some (micro)phase separation between the (meth)acrylate-based (co)polymer base component and the (meth)acrylate-based copolymeric additive within the resulting blend.

In the context of the present disclosure, it has been not only surprisingly found that any phase separation between the (meth)acrylate-based (co)polymer base component and the (meth)acrylate-based copolymeric additive is substantially avoided, but it was also found that the (meth)acrylate-based copolymeric additive is provided with excellent dilution characteristics into the (meth)acrylate-based (co)polymer base component.

Advantageously, it has been no less surprisingly found that the pressure sensitive adhesive compositions as described above provide excellent adhesion properties to difficult-to-bond MSE substrates without requiring the use of any tackifying resins in particular hydrocarbon tackifying resins.

As such, the pressure sensitive adhesive composition of the present disclosure is outstandingly suitable for transparent bonding applications, in particular for bonding transparent material (in particular transparent MSE plastic materials, such as PMMA, ABS and polycarbonate) or for applications where a transparent or colorless adhesive composition or tape is preferred. The pressure sensitive adhesive composition of the present disclosure may find appropriate applications in various industries, in particular in transportation, construction, decoration, home improvement and even electronics market applications.

In the context of the present disclosure, the expression "medium surface energy substrates" is meant to refer to those substrates having a surface energy comprised between 34 and 70 dynes per centimeter, typically between 34 and 60 dynes per centimeter, and more typically between 34 and 50 dynes per centimeter. Included among such materials are polyamide 6 (PA6), acrylonitrile butadiene styrene (ABS), PC/ABS blends, PC, PVC, PA, PUR, TPE, POM, polystyrene, poly(methyl methacrylate) (PMMA), clear coat surfaces, in particular clear coats for vehicles like a car or coated surfaces for industrial applications and composite materials like fiber reinforced plastics.

In the context of the present disclosure, the expression "high surface energy substrates" is meant to refer to those substrates having a surface energy of more than 350 dynes per centimeter, typically more than 400 dynes per centimeter, and more typically to those substrates having a surface energy comprised between 400 and 1100 dynes per centimeter. Included among such materials are metal substrates (e.g. aluminum, stainless steel), and glass.

The surface energy is typically determined from contact angle measurements as described, for example, in ASTM D7490-08.

The term superimposed, as used throughout the description, means that two or more layers of the liquid precursors of the polymers or of the polymer layers of the multilayer pressure sensitive adhesive assembly, are arranged on top of each other. Superimposed liquid precursor layers or polymer layers may be arranged directly next to each other so that the upper surface of the lower layer is abutting the lower surface of the upper layer.

The term adjacent, as used throughout the description, refers to two superimposed layers within the precursor multilayer pressure sensitive adhesive assembly or the cured multilayer pressure sensitive adhesive assembly which are arranged directly next to each other, i.e. which are abutting each other.

The terms "glass transition temperature" and "Tg" are used interchangeably and refer to the glass transition temperature of a (co)polymeric material or a mixture. Unless otherwise indicated, glass transition temperature values are estimated by the Fox equation, as detailed hereinafter.

In the context of the present disclosure, the expression "high Tg (meth)acrylic acid ester monomer units" is meant to designate (meth)acrylic acid ester monomer units having a Tg of above 50°C, as a function of the homopolymer of said high Tg monomers. The expression "low Tg (meth)acrylic acid ester monomer units" is meant to designate (meth)acrylic acid ester monomer units having a Tg of below 20°C, as a function of the homopolymer of said low Tg monomers.

The term "alkyl" refers to a monovalent group which is a saturated hydrocarbon. The alkyl can be linear, branched, cyclic, or combinations thereof and typically has 1 to 32 carbon atoms. In some embodiments, the alkyl group contains 1 to 25, 1 to 20, 1 to 18, 1 to 12, 1 to 10, 1 to 8, 1 to 6, or 1 to 4 carbon atoms. Examples of alkyl groups include, but are not limited to, methyl, ethyl, n-propyl, isopropyl, n-butyl, isobutyl, tert-butyl, n-pentyl, n-hexyl, cyclohexyl, n-heptyl, n-octyl, 2-ethylhexyl, 2-octyl and 2-propylheptyl.

According to a typical aspect of the present disclosure, the (meth)acrylate-based (co)polymer base component for use herein is different or distinct from the (meth)acrylate-based copolymeric additive.

In the context of the present disclosure, the expression "the (meth)acrylate-based (co)polymer base component is different or distinct from the (meth)acrylate-based copolymeric additive" is meant to express that the (meth)acrylate-based (co)polymer base component and the (meth)acrylate-based copolymeric additive are mutually self-excluding, meaning that one component cannot qualify as the other component.

According to an advantageous aspect, the (meth)acrylate-based (co)polymer base component for use herein comprises the copolymerization reaction product of a copolymerizable material comprising:
i. C₁-C₃₂ (meth)acrylic acid ester monomer units;
ii. optionally, (high Tg) ethylenically unsaturated monomer units having functional groups, in particular functional groups selected from the group consisting of acid, hydroxyl, acid anhydride, epoxide, amine, amide groups, and any combinations thereof; and
iii. optionally, further ethylenically unsaturated monomer units which are copolymerizable with monomer units (i) and/or (ii).

According to another advantageous aspect, the (meth)acrylate-based (co)polymer base component for use herein comprises the copolymerization reaction product of a copolymerizable material comprising:
i. from 45 to 99 wt.%, from 50 to 99 wt.%, from 60 to 99 wt.%, from 70 to 98 wt.%, from 80 to 98 wt.%, from 85 to 98 wt.%, or even from 90 to 98 wt.% of the C₁-C₃₂ (meth)acrylic acid ester monomer units;
ii. optionally, from 1 to 15 wt.%, from 2 to 12 wt.%, from 3 to 10 wt.%, from 4 to 10 wt.%, or even from 5 to 10 wt.%, of the ethylenically unsaturated monomer units having functional groups, in particular acid-functional ethylenically unsaturated monomer units; and
iii. optionally, from 0 to 40 wt.%, from 1 to 40 wt.%, from 5 to 35 wt.%, from 10 to 30 wt.%, of the further ethylenically unsaturated (polar) monomer units which are copolymerizable with monomer units (i) and/or (ii);
wherein the weight percentages are based on the total weight of the (meth)acrylate-based (co)polymer base component.

In a particular aspect of the disclosure, the C₁-C₃₂ (meth)acrylic acid ester monomer units for use in the (meth)acrylate-based (co)polymer base component are selected from the group consisting of linear or branched C₁-C₃₂ (meth)acrylic acid ester monomer units, C₁-C₂₄ (meth)acrylic acid ester monomer units, or even C₁-C₁₈ (meth)acrylic acid ester monomer units.

In an advantageous aspect, the C₁-C₃₂ (meth)acrylic acid ester monomer units for use in the (meth)acrylate-based (co)polymer base component are selected from the group consisting of iso-octyl (meth)acrylate, 2-ethylhexyl (meth)acrylate, 2-propylheptyl (meth)acrylate, butyl (meth)acrylate.

In another advantageous aspect, the C₁-C₃₂ (meth)acrylic acid ester monomer units for use in the (meth)acrylate-based (co)polymer base component have no functional groups.

In a typical aspect, the C₁-C₃₂ (meth)acrylic acid ester monomer units for use in the (meth)acrylate-based (co)polymer base component are different from the optional ethylenically unsaturated monomer units having functional groups and different from the optional further ethylenically unsaturated monomer units which are copolymerizable with monomer units (i) and/or (ii).

According to another advantageous aspect of the present disclosure, the (meth)acrylate-based (co)polymer base component for use herein has a Tg no greater than 20°C, no greater than 10°C, no greater than 0°C, no greater than -5°C, no greater than - 10°C, no greater than -15°C, or even no greater than -20°C, as estimated by the Fox equation.

In an exemplary aspect, the (meth)acrylate-based copolymeric additive comprising the free-radical random copolymerization reaction product of a copolymerizable material comprises greater than 12 wt.%, greater than 15 wt.%, greater than 18 wt.%, greater than 20 wt.%, greater than 22 wt.%, greater than 25 wt.%, greater than 28 wt.%, greater than 30 wt.%, greater than 32 wt.%, greater than 35 wt.%, greater than 40 wt.%, greater than 45 wt.%, greater than 50 wt.%, greater than 55 wt.%, greater than 60 wt.%, or even greater than 65 wt.%, of the (high Tg) C₁-C₁₈ methacrylic acid ester monomer units, based on the total weight of the (meth)acrylate-based copolymeric additive.

In another exemplary aspect, the (meth)acrylate-based copolymeric additive for use herein comprises no greater than 70 wt.%, no greater than 65 wt.%, no greater than 60 wt.%, no greater than 55 wt.%, no greater than 50 wt.%, no greater than 45 wt.%, no greater than 40 wt.%, or even greater than 35 wt.%, of the (high Tg) C₁-C₁₈ methacrylic acid ester monomer units, based on the total weight of the (meth)acrylate-based copolymeric additive.

According to an advantageous aspect of the disclosure, the (meth)acrylate-based copolymeric additive for use herein comprises from 11 to 60 wt.%, from 12 to 55 wt.%, from 15 to 55 wt.%, from 20 to 55 wt.%, from 20 to 50 wt.%, from 25 to 50 wt.%, from 25 to 45 wt.%, from 30 to 45 wt.%, or even from 30 to 40 wt.%, of the (high Tg) C₁-C₁₈ methacrylic acid ester monomer units, based on the total weight of the (meth)acrylate-based copolymeric additive.

According to another advantageous aspect of the disclosure, the (meth)acrylate-based copolymeric additive for use herein material comprises:
i. from 29 to 88 wt.%, from 30 to 88 wt.%, from 35 to 88 wt.%, from 40 to 85 wt.%, from 40 to 80 wt.%, from 40 to 75 wt.%, from 45 to 70 wt.%, from 50 to 65 wt.%, or even from 55 to 60 wt.% of the C₁-C₃₂ acrylic acid ester monomer units;
ii. from 11 to 70 wt.%, from 11 to 65 wt.%, from 12 to 60 wt.%, from 12 to 55 wt.%, from 15 to 55 wt.%, from 20 to 55 wt.%, from 20 to 50 wt.%, from 25 to 50 wt.%, from 25 to 45 wt.%, from 30 to 45 wt.%, or even from 30 to 40 wt.%, of the C₁-C₁₈ methacrylic acid ester monomer units; and
iii. from 0.5 to 15 wt.%, from 1 to 15 wt.%, from 2 to 12 wt.%, from 3 to 10 wt.%, from 4 to 10 wt.%, or even from 5 to 10 wt.%, of the ethylenically unsaturated monomer units having functional groups;
wherein the weight percentages are based on the total weight of the (meth)acrylate-based copolymeric additive.

In a typical aspect of the disclosure, the C₁-C₃₂ (meth)acrylic acid ester monomer units for use in the (meth)acrylate-based copolymeric additive are selected from the group consisting of linear or branched C₁-C₃₂ acrylic acid ester monomer units, C₁-C₂₄ acrylic acid ester monomer units, or even C₁-C₁₈ acrylic acid ester monomer units, and any mixtures thereof.

In a more typical aspect, the C₁-C₃₂ (meth)acrylic acid ester monomer units for use in the (meth)acrylate-based copolymeric additive are selected from the group consisting of iso-octyl acrylate, 2-ethylhexyl acrylate, 2-propylheptyl acrylate, butyl acrylate, and any mixtures thereof.

According to one advantageous aspect, the (high Tg) C₁-C₁₈ methacrylic acid ester monomer units for use in the (meth)acrylate-based copolymeric additive herein have no functional groups.

In another advantageous aspect of the disclosure, the(meth)acrylate-based copolymeric additive comprising the free-radical random copolymerization reaction product of a copolymerizable material comprises only one single C₁-C₁₈ methacrylic acid ester monomer unit type.

In one exemplary aspect, the C₁-C₁₈ methacrylic acid ester monomer units in the (meth)acrylate-based copolymeric additive are selected from the group consisting of methyl methacrylate, ethyl methacrylate, propyl methacrylate, n-butyl methacrylate, t-butyl methacrylate, isobutyl methacrylate, n-hexyl methacrylate, tetrahydrofurfuryl methacrylate, cyclohexyl methacrylate, 3,3,5-trimethylcyclohexyl methacrylate, tert-butyl cyclohexyl methacrylate, heptyl methacrylate, cycloheptyl methacrylate, 2-ethyhexyl methacrylate, n-octyl methacrylate, 2-phenoxy ethyl methacrylate, nonyl methacrylate, decyl methacrylate, lauryl methacrylate, isobornyl methacrylate, phenyl methacrylate, benzyl methacrylate, and any mixtures thereof.

According to an advantageous aspect, the C₁-C₁₈ methacrylic acid ester monomer units for use herein are selected from the group consisting of methyl methacrylate, cyclohexyl methacrylate, isobornyl methacrylate, tetrahydrofurfuryl methacrylate, 3,3,5-trimethylcyclohexyl methacrylate, 2-phenoxy ethyl methacrylate, tert-butyl cyclohexyl methacrylate, tert-butyl methacrylate, and any mixtures thereof.

According to a more advantageous aspect, the C₁-C₁₈ methacrylic acid ester monomer units for use herein are selected from the group consisting of methyl methacrylate, cyclohexyl methacrylate, and any mixtures thereof.

According to a particularly advantageous aspect, the C₁-C₁₈ methacrylic acid ester monomer units for use herein are selected to comprise methyl methacrylate.

In one beneficial aspect of the disclosure, the ethylenically unsaturated monomer units having a functional group, and for use in both the (meth)acrylate-based (co)polymer base component and the (meth)acrylate-based copolymeric additive, have a functional group selected from the group consisting of acid, amine, hydroxyl, amide, isocyanate, acid anhydride, epoxide, nitrile, and any combinations thereof.

According to a more beneficial aspect of the disclosure, the ethylenically unsaturated monomer units having a functional group, and for use in both the (meth)acrylate-based (co)polymer base component and the (meth)acrylate-based copolymeric additive, have a functional group selected from the group of acid groups.

According to another beneficial aspect of the disclosure, the ethylenically unsaturated monomer units having a functional group, and for use in both the (meth)acrylate-based (co)polymer base component and the (meth)acrylate-based copolymeric additive, have a functional group selected from the group consisting of (meth)acrylic acid, methoxyethyl (meth)acrylate, ethoxyethyl (meth)acrylate, 2-hydroxyethyl (meth)acrylate, 2-aminoethyl (meth)acrylate, dimethylaminoethyl (meth)acrylate, diethylaminoethyl (meth)acrylate, N-vinyl pyrrolidone, N-vinyl caprolactam, (meth)acrylamide, N-vinylacetamide, maleic anhydride, 4-acryloyl morpholine, glycidyl (meth)acrylate, 2-isocyanato ethyl (meth)acrylate, tert-butylamino ethyl (meth)acrylate, acrylonitrile, and any mixtures thereof.

According to particularly beneficial aspect of the disclosure, the ethylenically unsaturated monomer units having a functional group, and for use in both the (meth)acrylate-based (co)polymer base component and the (meth)acrylate-based copolymeric additive, have a functional group selected from the group consisting of acrylic acid, dimethylaminoethyl (meth)acrylate, and any mixtures thereof.

In a typical aspect of the present disclosure, the C₁-C₃₂ (meth)acrylic acid ester monomer units, the C₁-C₁₈ methacrylic acid ester monomer units and the ethylenically unsaturated monomer units having a functional group for use in the (meth)acrylate-based copolymeric additive, are mutually self-excluding. Accordingly, any of those monomer unit types cannot qualify as the other monomer unit types.

In one particular aspect of the present disclosure, the (meth)acrylate-based copolymeric additive for use herein comprises the free-radical random copolymerization reaction product of a copolymerizable material comprising no greater than 4, no greater than 3, no greater than 2, or even no greater than 1 different C₁-C₁₈ methacrylic acid ester monomer units.

According to one advantageous aspect, the (meth)acrylate-based copolymeric additive for use in the present disclosure has a Tg no greater than 45°C, no greater than 40°C, no greater than 35°C, no greater than 30°C, no greater than 25°C, no greater than 20°C, no greater than 10°C, no greater than 0°C, or even no greater than -5°C, as estimated by the Fox equation.

For the (meth)acrylate-based copolymeric additive, a useful predictor of interpolymer Tg for specific combinations of various monomers can be computed by application of the Fox Equation: 1/Tg = ∑Wᵢ/Tgᵢ. In this equation, Tg is the glass transition temperature of the mixture, Wᵢ is the weight fraction of component i in the mixture, and Tgᵢ is the glass transition temperature of component i, and all glass transition temperatures are in Kelvin (K).

According to another advantageous aspect, the (meth)acrylate-based copolymeric additive for use in the present disclosure has a Tg greater than -30°C, greater than -25°C, greater than -20°C, greater than -15°C, or even greater than -10°C, as estimated by the Fox equation.

According to still another advantageous aspect, the (meth)acrylate-based copolymeric additive for use in the present disclosure has a Tg in a range from -30°C to 50°C, from -25°C to 50°C, from -25°C to 45°C, from -20°C to 40°C, from -20°C to 35°C, from -20°C to 30°C, from -20°C to 25°C, from -15°C to 25°C, from -15°C to 20°C, from - 15°C to 15°C, from -15°C to 10°C, from -15°C to 5°C, from -15°C to 0°C, from -10°C to 0°C, or even from -5°C to 0°C, as estimated by the Fox equation.

In another advantageous aspect of the disclosure, the (meth)acrylate-based copolymeric additive for use herein has a weight average molecular weight (M_{w}) greater than 12,000 Daltons, greater than 15,000 Daltons, greater than 20,000 Daltons, greater than 25,000 Daltons, greater than 30,000 Daltons, greater than 35,000 Daltons, or even greater than 40,000 Daltons.

The weight average molecular weight (M_{w}) of the (meth)acrylate-based copolymeric additive is determined using conventional gel permeation chromatography (GPC) as detailed in the experimental section.

In yet another advantageous aspect of the disclosure, the (meth)acrylate-based copolymeric additive for use herein has a weight average molecular weight (M_{w}) no greater than 100,000 Daltons, no greater than 80,000 Daltons, no greater than 70,000 Daltons, no greater than 60,000 Daltons, no greater than 50,000 Daltons, no greater than 45,000 Daltons, no greater than 40,000 Daltons, no greater than 35,000 Daltons, no greater than 30,000 Daltons, or even no greater than 25,000 Daltons.

In a more advantageous aspect of the disclosure, the (meth)acrylate-based copolymeric additive for use herein has a weight average molecular weight (M_{w}) in a range from 12,000 to 100,000 Daltons, from 15,000 to 100,000 Daltons, from 20,000 to 100,000 Daltons, from 25,000 to 100,000 Daltons, from 25,000 to 80,000 Daltons, from 25,000 to 60,000 Daltons, from 30,000 to 60,000 Daltons, from 30,000 to 55,000 Daltons, from 30,000 to 50,000 Daltons, from 30,000 to 45,000 Daltons, or even from 30,000 to 40,000 Daltons.

In another advantageous aspect of the disclosure, the (meth)acrylate-based copolymeric additive for use herein has a number average molecular weight (Mₙ) greater than 5,000 Daltons, greater than 6,000 Daltons, greater than 8,000 Daltons, greater than 10,000 Daltons, greater than 12,000 Daltons, greater than 14,000 Daltons, greater than 15,000 Daltons, greater than 16,000 Daltons, greater than 18,000 Daltons, or even greater than 20,000 Daltons.

The number average molecular weight (Mₙ) of the (meth)acrylate-based copolymeric additive is determined using conventional gel permeation chromatography (GPC) as detailed in the experimental section.

In yet another advantageous aspect of the disclosure, the (meth)acrylate-based copolymeric additive for use herein has a number average molecular weight (Mₙ) no greater than 50,000 Daltons, no greater than 45,000 Daltons, no greater than 40,000 Daltons, no greater than 35,000 Daltons, no greater than 30,000 Daltons, no greater than 25,000 Daltons, or even no greater than 20,000 Daltons.

In a more advantageous aspect of the disclosure, the (meth)acrylate-based copolymeric additive for use herein has a number average molecular weight (Mₙ) in a range from 10,000 to 50,000 Daltons, from 10,000 to 40,000 Daltons, from 10,000 to 35,000 Daltons, from 10,000 to 30,000 Daltons, from 15,000 to 30,000 Daltons, or even from 15,000 to 25,000 Daltons.

In a particular aspect, the (meth)acrylate-based copolymeric additive for use herein has a molecular weight distribution (M_{w}/Mₙ) greater than 1, greater than 1.2, greater than 1.4, greater than 1.5, greater than 1.6, greater than 1.8, or even greater than 2.0.

According to a typical aspect, the (meth)acrylate-based copolymeric additive for use in the disclosure is a random copolymer which is (substantially) free of block copolymers and/or (substantially) free of copolymer blocks, in particular copolymer blocks resulting exclusively from the copolymerization of C₁-C₁₈ methacrylic acid ester monomer units.

In the context of the present disclosure, the expression "the copolymer is (substantially) free of block copolymers and/or (substantially) free of copolymer blocks" is meant to express that the copolymer comprises no greater than 0.5 wt.%, in particular no greater than 0.1 wt.%, or even no greater than 0.05 wt.%, of block copolymers and/or copolymer blocks, based on the total weight of the copolymer.

According to one typical aspect, the pressure sensitive adhesive composition of the present disclosure comprises a blend of:
a) at least 60 wt.%, at least 65 wt.%, at least 70 wt.%, at least 75 wt.%, at least 80 wt.%, at least 85 wt.%, or even at least 90 wt.%, of the (meth)acrylate-based (co)polymer base component; and
b) up to 40 wt.%, up to 35 wt.%, up to 30 wt.%, up to 25 wt.%, up to 20 wt.%, up to 15 wt.%, or even up to 10 wt.%, of the (meth)acrylate-based copolymeric additive, based on the total weight of the pressure sensitive adhesive composition.

According to another typical aspect, the pressure sensitive adhesive composition of the present disclosure comprises a blend of:
a) from 60 to 95 wt.%, from 70 to 95 wt.%, from 80 to 95 wt.%, or even from 85 to 95 wt.%, of the (meth)acrylate-based (co)polymer base component; and
b) from 5 to 40 wt.%, from 5 to 30 wt.%, from 5 to 20 wt.%, or even from 5 to 15 wt.%, of the (meth)acrylate-based copolymeric additive, based on the total weight of the pressure sensitive adhesive composition.

In a particularly advantageous aspect, the pressure sensitive adhesive composition of the present disclosure is (substantially) free of tackifying resins, in particular hydrocarbon tackifying resins, more in particular C5-based hydrocarbon resins, C9-based hydrocarbon resins, C5/C9-based hydrocarbon resins, and any mixtures thereof.

In the context of the present disclosure, the expression "the pressure sensitive adhesive composition is (substantially) free of tackifying resins" is meant to express that the pressure sensitive adhesive composition comprises no greater than 0.5 wt.%, in particular no greater than 0.1 wt.%, or even no greater than 0.05 wt.%, of tackifying resins, based on the total weight of the pressure sensitive adhesive composition.

In another advantageous aspect, the pressure sensitive adhesive composition of the present disclosure is (substantially) free of (chemical) crosslinking agents, in particular (chemical) crosslinking agents capable of crosslinking the (meth)acrylate-based (co)polymer base component with the (meth)acrylate-based copolymeric additive.

In the context of the present disclosure, the expression "the pressure sensitive adhesive composition is (substantially) free of crosslinking agents" is meant to express that the pressure sensitive adhesive composition comprises no greater than 0.5 wt.%, in particular no greater than 0.1 wt.%, or even no greater than 0.05 wt.%, of crosslinking agents, based on the total weight of the pressure sensitive adhesive composition.

According to one typical aspect, the (meth)acrylate-based (co)polymer base component and the (meth)acrylate-based copolymeric additive for use in the pressure sensitive adhesive composition of the present disclosure, are not crosslinkable with each other.

In an alternative aspect, the pressure sensitive adhesive composition of the present disclosure may comprise (chemical) crosslinking agents.

According to one advantageous aspect, the pressure sensitive adhesive composition of the present disclosure comprises silica nanoparticles having an average particle size no greater than 400 nm, when measured by Dynamic Light Scattering (DLS) techniques according to test method described in the experimental section.

In the context of the present disclosure, the incorporation of silica nanoparticles having an average particle size no greater than 400 nm the pressure sensitive adhesive composition of the present disclosure has been found to advantageously impact its adhesion and cohesion properties, in particular with respect to peel forces and shear resistance, to difficult-to-bond MSE substrates, while maintaining excellent transparency characteristics.

In the context of the present disclosure, any silica nanoparticles may be used herein, provided they meet the above-mentioned average particle size requirement. Suitable silica nanoparticles for use herein may be easily identified by those skilled in the art in the light of the present disclosure.

In a beneficial aspect of the present disclosure, the silica nanoparticles for use herein have an average particle size no greater than 350 nm, no greater than 300 nm, no greater than 250 nm, no greater than 200 nm, no greater than 150 nm, no greater than 100 nm, no greater than 80 nm, no greater than 60 nm, no greater than 50 nm, no greater than 40 nm, no greater than 30 nm, or even no greater than 20 nm, when measured by Dynamic Light Scattering (DLS) techniques according to test method described in the experimental section.

In another beneficial aspect of the present disclosure, the silica nanoparticles for use herein have an average particle size in a range from 1 to 400 nm, from 2 to 350 nm, from 3 to 300 nm, from 3 to 250 nm, from 5 to 200 nm, from 5 to 150 nm, from 5 to 100 nm, from 5 to 80 nm, from 5 to 60 nm, or even from 10 to 50 nm, when measured by Dynamic Light Scattering (DLS) techniques according to test method described in the experimental section.

As will be easily apparent to those skilled in the art, in the light of the disclosure, the silica nanoparticles may or may not be provided with suitable surface modification, depending on the nature of the polyacrylate-based blend material used to form the pressure sensitive adhesive composition of the present disclosure.

According to an advantageous aspect of the pressure sensitive adhesive composition of the present disclosure, the silica nanoparticles for use herein are provided with a surface modification selected from the group of hydrophobic surface modifications, hydrophilic surface modifications, and any combinations thereof.

According to a more advantageous aspect, the silica nanoparticles for use in the present disclosure are provided with a hydrophobic surface modification.

According to another advantageous aspect, the silica nanoparticles for use herein are selected from the group consisting of fumed silica nanoparticles.

In a particularly advantageous aspect of the present disclosure, the silica nanoparticles for use herein are selected from the group consisting of hydrophobic fumed silica nanoparticles, hydrophilic fumed silica nanoparticles, and any combinations thereof.

In a most advantageous aspect of the pressure sensitive adhesive composition according to the present disclosure, the silica nanoparticles for use herein are selected from the group of hydrophobic fumed silica nanoparticles.

According to another advantageous aspect, the silica nanoparticles for use herein have a specific surface area (BET) in a range from 50 to 200 m²/g, from 60 to 180 m²/g, from 60 to 160 m²/g, from 50 to 150 m²/g, from 60 to 150 m²/g, from 80 to 150 m²/g, or even from 90 to 130 m²/g, when measured according to BS ISO 9277: 2010.

In one exemplary aspect of the present disclosure, the silica nanoparticles having an average particle size no greater than 400 nm are present in the pressure sensitive adhesive composition, in an amount ranging from 1 to 30 wt.%, from 2 to 25 wt.%, from 2 to 20 wt.%, or even from 3 to 15 wt.%, based on the weight of the pressure sensitive adhesive composition.

According to another aspect, the present disclosure is directed to a multilayer pressure sensitive adhesive assembly comprising at least a first polymer layer and a second pressure sensitive adhesive layer adjacent to the first polymer layer, wherein the second pressure sensitive adhesive layer has a composition as described above.

In the context of the present disclosure, it has surprisingly been found that a multilayer pressure sensitive adhesive assembly as described above, overall provides excellent adhesion properties, in particular with respect to peel forces, to difficult-to-bond MSE substrates, while maintaining excellent transparency characteristics.

This is very surprising and counter-intuitive finding in many aspects, not only because the presence of particles, in particular silica nanoparticles, in multilayer adhesive tapes are generally assumed to detrimentally affect transparency of the resulting tape, but also because silica nanoparticles are generally recognized to beneficially affect only shear properties and not peel performance, let alone on difficult-to-bond MSE substrates.

In an advantageous aspect of the multilayer pressure sensitive adhesive assembly according to the disclosure, the first polymer layer is a pressure sensitive adhesive layer.

According to advantageous aspect, the first polymer layer of the multilayer pressure sensitive adhesive assembly is (substantially) free of particulate filler material.

In the context of the present disclosure, the expression "the first polymer layer is (substantially) free of particulate filler material" is meant to express that the first polymer layer comprises no greater than 0.5 wt.%, in particular no greater than 0.1 wt.%, or even no greater than 0.05 wt.%, of particulate filler material, based on the total weight of the first polymer layer.

This is very surprising and counter-intuitive finding that a multilayer pressure sensitive adhesive assembly as described above and wherein its first polymer layer is (substantially) free of particulate filler material, still provides overall excellent adhesion properties, in particular with respect to peel forces, to difficult-to-bond MSE substrates, while maintaining excellent transparency characteristics. It is indeed generally assumed that the presence of a polymeric foam layer in a multilayer pressure sensitive adhesive assembly, in particular a polymeric foam layer resulting from the incorporation hollow particulate filler material (such as e.g. expandable microspheres, glass microspheres and glass bubbles), is necessary to ensure acceptable adhesion properties to challenging-to-bond substrates like MSE substrates. Moreover, it is commonly recognized that a polymeric foam layer in a multilayer pressure sensitive adhesive assembly helps addressing deforming issues and energy distribution which are known to affect the overall adhesion properties of the multilayer assembly.

In a particular aspect of the present disclosure, the first polymer layer is substantially free of particulate filler material having an average particle size no greater than 400 nm when measured by Dynamic Light Scattering (DLS) techniques according to test method described in the experimental section.

In another particular aspect of the present disclosure, the first polymer layer is substantially free of particulate filler material having an average particle size greater than 400 nm when measured by Dynamic Light Scattering (DLS) techniques according to test method described in the experimental section.

According to an advantageous aspect, the first polymer layer is substantially free of particulate filler material selected from the group consisting of hollow (non-porous) particulate filler material, in particular hollow microspheres, expandable or expanded microspheres, glass beads, glass bubbles, glass microspheres, ceramic microspheres, hollow polymeric particles, and any combinations or mixtures thereof.

According to a typical aspect, the first polymer layer for use in the multilayer pressure sensitive adhesive assembly is substantially free of particulate filler material selected from the group consisting of silica type fillers, hydrophobic silica type fillers, hydrophilic silica type fillers, hydrophobic fumed silica, hydrophilic fumed silica, fibers, electrically and/or thermally conducting particles, nanoparticles, in particular silica nanoparticles, and any combinations or mixtures thereof.

In another typical aspect of the multilayer pressure sensitive adhesive assembly according to the disclosure, the first polymer layer does not take the form of a polymeric foam layer.

In the context of the present disclosure, the term "polymeric foam" is meant to designate a material based on a polymer and which material comprises voids, typically in an amount of at least 5% by volume, typically from 10% to 55% by volume or from 10% to 45% by volume.

A polymeric foam layer has for example a thickness comprised between 100 and 6000 micrometers, between 200 and 4000 micrometers, between 500 and 2000 micrometers, or even between 800 and 1500 micrometers. As will be apparent to those skilled in the art, in the light of the present description, the preferred thickness of the second pressure sensitive adhesive polymeric foam layer will be dependent on the intended application.

A polymeric foam layer typically has a density comprised between 0.45 g/cm³ and 1.5 g/cm³, between 0.45 g/cm³ and 1.10 g/cm³, between 0.50 g/cm³ and 0.95 g/cm³, between 0.60 g/cm³ and 0.95 g/cm³, or even between 0.70 g/cm³ and 0.95 g/cm³. This density is achieved by including voids or cells. Typically, the polymeric foam layer will comprise at least 5% of voids by volume and for example between 15 and 45 %, or between 20% and 45% by volume.

The voids or cells in the polymeric foam layer can be created in any of the known manners described in the art and include the use of a gas or blowing agent and/or including hollow particles into the composition for the polymeric foam layer. For example, according to one method to create a polymeric foam described in US 4,415,615, an acrylic foam can be obtained by the steps of (i) frothing a composition containing the acrylate monomers and optional comonomers, (ii) coating the froth on a backing and (iii) polymerizing the frothed composition. It is also possible to coat the unfrothed composition of the acrylate monomers and optional comonomers to the backing and to then simultaneously foam and polymerize that composition. Frothing of the composition may be accomplished by whipping a gas into the polymerizable composition. Preferred gasses for this purpose are inert gasses such as nitrogen and carbon dioxide, particularly if the polymerization is photoinitiated. Alternatively, the voids may result from the incorporation of hollow fillers, such as hollow polymeric particles, hollow glass microspheres or hollow ceramic microspheres.

According to an alternative aspect of the multilayer pressure sensitive adhesive assembly according to the disclosure, the first polymer layer is a polymeric foam layer, which is in particular obtained by frothing techniques, more in particular by whipping a gas into the polymerizable composition of the first polymer layer.

According to an advantageous aspect of the present disclosure, the multilayer pressure sensitive adhesive assembly is in the form of a skin/core multilayer pressure sensitive adhesive assembly, wherein the first polymer layer is the core layer of the multilayer pressure sensitive adhesive assembly and the second pressure sensitive adhesive layer is the skin layer of the multilayer pressure sensitive adhesive assembly.

Multilayer pressure sensitive adhesive assemblies of this type, and in particular dual layer polymeric tape assemblies, are particularly advantageous when compared to single-layer pressure sensitive adhesives, in that adhesion (quick adhesion) can be adjusted by the formulation of the second pressure sensitive adhesive layer (also commonly referred to as the skin layer), while other properties/requirements of the overall assembly such as application issues, deforming issues and energy distribution may be addressed by appropriate formulation of the first polymeric layer (also commonly referred to as the core layer).

According to a further advantageous aspect, the multilayer pressure sensitive adhesive assembly of the present disclosure is in the form of a multilayer pressure sensitive adhesive assembly further comprising a third pressure sensitive adhesive layer thereby forming e.g. a three-layered multilayer pressure sensitive adhesive assembly.

Preferably, the third pressure sensitive adhesive layer is adjacent to the first polymer layer in the side of the first polymer layer which is opposed to the side of the first polymer layer adjacent to the second pressure sensitive adhesive layer. Preferably still, the second pressure sensitive adhesive layer, the first polymer layer and the third pressure sensitive adhesive layer are superimposed.

In a beneficial aspect, the multilayer pressure sensitive adhesive assembly is in the form of a skin/core/skin multilayer pressure sensitive adhesive assembly, wherein the first polymer layer is the core layer of the multilayer pressure sensitive adhesive assembly, the second pressure sensitive adhesive layer is the first skin layer of the multilayer pressure sensitive adhesive assembly and the third pressure sensitive adhesive layer is the second skin layer of the multilayer pressure sensitive adhesive assembly.

The first polymer layer and the third pressure sensitive adhesive layer may have any composition commonly known in the art. As such, the compositions of the first polymer layer and the third pressure sensitive adhesive layer for use in the multilayer pressure sensitive adhesive assemblies of the present disclosure are not particularly limited.

In an exemplary aspect, the first polymer layer and the third pressure sensitive adhesive layer comprises a polymer base material selected from the group consisting of polyacrylates, polyurethanes, polyolefins, polyamines, polyamides, polyesters, polyethers, polyisobutylene, polystyrenes, polyvinyls, polyvinylpyrrolidone, natural rubbers, synthetic rubbers, and any combinations, copolymers or mixtures thereof.

According to an advantageous aspect, the first polymer layer and the third pressure sensitive adhesive layer comprise a polymer base material selected from the group consisting of polyacrylates.

According to a preferred aspect of the pressure sensitive adhesive assemblies of the present disclosure, the first polymer layer and the third pressure sensitive adhesive layer comprise a polymer base material selected from the group consisting of polyacrylates whose main monomer component preferably comprises a linear or branched alkyl (meth)acrylate ester, preferably a non-polar linear or branched alkyl (meth)acrylate ester having a linear or branched alkyl group comprising preferably from 1 to 30, from 1 to 20, or even from 1 to 15 carbon atoms.

According to another preferred aspect of the present disclosure, the first polymer layer and the third pressure sensitive adhesive layer comprise a polymer base material selected from the group consisting of polyacrylates whose main monomer component comprises a linear or branched alkyl (meth)acrylate ester selected from the group consisting of methyl (meth)acrylate, ethyl (meth)acrylate, n-propyl (meth)acrylate, isopropyl (meth)acrylate, n-butyl acrylate, isobutyl acrylate, tert-butyl (meth)acrylate, n-pentyl (meth)acrylate, iso-pentyl (meth)acrylate, n-hexyl (meth)acrylate, iso-hexyl (meth)acrylate, cyclohexyl (meth)acrylate, phenyl (meth)acrylate, octyl (meth)acrylate, iso-octyl (meth)acrylate, 2-octyl(meth)acrylate, 2-ethylhexyl (meth)acrylate, decyl (meth)acrylate, lauryl (meth)acrylate, 2-propylheptyl (meth)acrylate, stearyl (meth)acrylate, isobornyl acrylate, benzyl (meth)acrylate, octadecyl acrylate, nonyl acrylate, dodecyl acrylate, isophoryl (meth)acrylate, and any combinations or mixtures thereof.

In an advantageous aspect of the present disclosure, the linear or branched alkyl (meth)acrylate ester for use herein is selected from the group consisting of iso-octyl (meth)acrylate, 2-ethylhexyl (meth)acrylate, 2-propylheptyl (meth)acrylate, butyl acrylate, and any combinations or mixtures thereof.

In a particular advantageous aspect of the present disclosure, the linear or branched alkyl (meth)acrylate ester for use herein is selected from the group consisting of iso-octyl acrylate, 2-ethylhexyl acrylate and 2-propylheptyl acrylate.

According to a preferred aspect of the pressure sensitive adhesive assemblies of the present disclosure, the polymer base material for use herein comprises a polar comonomer, preferably a polar acrylate, more preferably selected from the group consisting of acrylic acid, methacrylic acid, itaconic acid, hydroxyalkyl acrylates, acrylamides and substituted acrylamides, acrylamines and substituted acrylamines and any combinations or mixtures thereof.

The various (meth)acrylate-based copolymers for use herein may be prepared by any conventional free radical polymerization method, including solution, radiation, bulk, dispersion, emulsion, solventless, and suspension processes.

The adhesive copolymers may be prepared via suspension polymerizations as disclosed in U.S. 3,691,140 (Silver); 4,166,152 (Baker et al.); 4,636,432 (Shibano et al); 4,656,218 (Kinoshita); and 5,045,569 (Delgado).

Polymerization via emulsion techniques may require the presence of an emulsifier (which may also be called an emulsifying agent or a surfactant). Useful emulsifiers for the present disclosure include those selected from the group consisting of anionic surfactants, cationic surfactants, nonionic surfactants, and mixtures thereof. Preferably, an emulsion polymerization is carried out in the presence of anionic surfactant(s). A useful range of surfactant concentration is from about 0.5 to about 8 weight percent, preferably from about 1 to about 5 weight percent, based on the total weight of all monomers of the emulsion pressure-sensitive adhesive.

Alternatively, the copolymers can be polymerized by techniques including, but not limited to, the conventional techniques of solvent polymerization, dispersion polymerization, and solventless bulk polymerization. The monomer mixture may comprise a polymerization initiator, especially a thermal initiator or a photoinitiator of a type and in an amount effective to polymerize the comonomers.

A typical solution polymerization method is carried out by adding the monomers, a suitable solvent, and an optional chain transfer agent to a reaction vessel, adding a free radical initiator, purging with nitrogen, and maintaining the reaction vessel at an elevated temperature, typically in the range of about 40 to 100°C until the reaction is completed, typically in about 1 to 20 hours, depending upon the batch size and temperature. Examples of the solvent are methanol, tetrahydrofuran, ethanol, isopropanol, acetone, methyl ethyl ketone, methyl acetate, ethyl acetate, toluene, xylene, and an ethylene glycol alkyl ether. Those solvents can be used alone or as mixtures thereof.

In a typical photopolymerization method, a monomer mixture may be irradiated with ultraviolet (UV) rays in the presence of a photopolymerization initiator (i.e., photoinitiators). Preferred photoinitiators are those available under the trade designations IRGACURE™ and DAROCUR™ from BASF and include 1-hydroxy cyclohexyl phenyl ketone (IRGACURE™ 184), 2,2-dimethoxy-1,2-diphenylethan-1-one (IRGACURE 651), *bis*(2,4,6-trimethylbenzoyl)phenylphosphineoxide (IRGACURE™ 819), 1-[4-(2-hydroxyethoxy)phenyl]-2-hydroxy-2-methyl-1-propane-1-one (IRGACURE™ 2959), 2-benzyl-2-dimethylamino-1-(4-morpholinophenyl)butanone (IRGACURE™ 369), 2-methyl-1-[4-(methylthio)phenyl]-2-morpholinopropan-1-one (IRGACURE™ 907), and 2-hydroxy-2-methyl-1-phenyl propan-1-one (DAROCUR™ 1173). Particularly preferred photoinitiators are IRGACURE™ 819, 651, 184 and 2959.

Solventless polymerization methods, such as the continuous free radical polymerization method described in U.S. Pat. Nos. 4,619,979 and 4,843,134 (Kotnour et al.); the essentially adiabatic polymerization methods using a batch reactor described in U.S. Pat. No. 5,637,646 (Ellis); and, the methods described for polymerizing packaged pre-adhesive compositions described in U.S. Pat. No. 5,804,610 (Hamer et al.) may also be utilized to prepare the polymers.

Water-soluble and oil-soluble initiators useful in preparing the acrylate-based (co)polymers for use in the present disclosure are initiators that, on exposure to heat, generate free-radicals which initiate (co)polymerization of the monomer mixture. Water-soluble initiators are preferred for preparing the (meth)acrylate polymers by emulsion polymerization. Suitable water-soluble initiators include but are not limited to those selected from the group consisting of potassium persulfate, ammonium persulfate, sodium persulfate, and mixtures thereof; oxidation-reduction initiators such as the reaction product of the above-mentioned persulfates and reducing agents such as those selected from the group consisting of sodium metabisulfite and sodium bisulfite; and 4,4'-azobis(4-cyanopentanoic acid) and its soluble salts (e.g., sodium, potassium). The preferred water-soluble initiator is potassium persulfate. Suitable oil-soluble initiators include but are not limited to those selected from the group consisting of azo compounds such as VAZO™ 64 (2,2'-azobis(isobutyronitrile)) and VAZO™ 52 (2,2'-azobis(2,4-dimethylpentanenitrile)), both available from E.I. du Pont de Nemours Co., peroxides such as benzoyl peroxide and lauroyl peroxide, and mixtures thereof. The preferred oil-soluble thermal initiator is (2,2'-azobis(isobutyronitrile)). When used, initiators may comprise from about 0.05 to about 1 part by weight, or from about 0.1 to about 0.5 part by weight based on 100 parts by weight of monomer components in the first pressure-sensitive adhesive.

If desired, a chain transfer agent may be added to the monomer mixture of the (co)polymers to produce a (co)polymer having the desired molecular weight. Examples of useful chain transfer agents include but are not limited to those selected from the group consisting of carbon tetrabromide, alcohols, mercaptans, and mixtures thereof. When present, the preferred chain transfer agents are isooctyl thioglycolate and carbon tetrabromide. The monomer mixture may further comprise up to about 5 parts by weight of a chain transfer agent, typically about 0.01 to about 5 parts by weight, if used, preferably about 0.5 parts by weight to about 3 parts by weight, based upon 100 parts by weight of the total monomer mixture.

In order to increase cohesive strength of the first pressure sensitive adhesive layer and/or the second pressure sensitive adhesive layer and/or the third pressure sensitive adhesive layer composition, a crosslinking additive may be added to the adhesive composition. Two main types of crosslinking additives are exemplary. The first crosslinking additive is a thermal crosslinking additive such as multifunctional aziridine, isocyanate and epoxy. One example of aziridine crosslinker is 1,1'-isophthaloyl-bis(2-methylaziridine (CAS No. 7652-64-4). Such chemical crosslinkers can be added into PSAs after polymerization and activated by heat during oven drying of the coated adhesive. Although polyfunctional (meth)acrylates may be included in the low Tg copolymer component and may function as crosslinking agents, additional crosslinking agents may be added. In still other methods of crosslinking, thermal crosslinkers may be used, optionally in combination with suitable accelerants and retardants. Suitable thermal crosslinkers for use herein include, but are not limited to, isocyanates, more particularly trimerized isocyanates and/or sterically hindered isocyanates that are free of blocking agents, or else epoxide compounds such as epoxide-amine crosslinker systems. Advantageous crosslinker systems and methods are described e.g. in the descriptions of DE202009013255 U1, EP 2 305 389 A, EP 2 414 143 A, EP 2 192 148 A, EP 2 186 869, EP 0 752 435 A, EP 1 802 722 A, EP 1 791 921 A, EP 1 791 922 A, EP 1 978 069 A, and DE 10 2008 059 050 A, the relevant contents of which are herewith incorporated by reference. Suitable accelerant and retardant systems for use herein are described e.g. in the description of US-A1- 2011/0281964, the relevant content of which is herewith explicitly incorporated by reference. Suitable thermal crosslinkers for use herein include epoxycyclohexyl derivatives, in particular epoxycyclohexyl carboxylate derivatives, with particular preference to (3,4-epoxycyclohexane)methyl 3,4-epoxycyclohexylcarboxylate, commercially available from Cytec Industries Inc. under tradename UVACURE 1500. In another embodiment, chemical crosslinkers, which rely upon free radicals to carry out the crosslinking reaction, may be employed. Reagents such as, for example, peroxides serve as a source of free radicals. When heated sufficiently, these precursors will generate free radicals that bring about a crosslinking reaction of the polymer. A common free radical generating reagent is benzoyl peroxide. Free radical generators are required only in small quantities, but generally require higher temperatures to complete a crosslinking reaction than those required for the bisamide and isocyanate reagents.

The second type of crosslinking additive is a photosensitive crosslinker, which is activated by high intensity ultraviolet (UV) light. Two common photosensitive crosslinkers used for acrylic PSAs are benzophenone and copolymerizable aromatic ketone monomers as described in U.S. Patent No. 4,737,559 (Kellen et al.). Another photocrosslinker, which can be post-added to the solution or syrup copolymer and activated by UV light is a triazine, for example, 2,4-bis(trichloromethyl)-6-(4-methoxy-phenyl)-s-triazine. In some embodiments, multifunctional acrylates may be used to increase the cohesive strength. Multi-functional acrylates are particularly useful for emulsion polymerization. Examples of useful multi-functional acrylate crosslinking agents include, but are not limited to, diacrylates, triacrylates, and tetraacrylates, such as 1,6-hexanediol diacrylate, poly(ethylene glycol) diacrylates, polybutadiene diacrylate, polyurethane diacrylates, and propoxylated glycerin triacrylate, and mixtures thereof.

Hydrolyzable, free-radically copolymerizable crosslinkers, such as monoethylenically unsaturated mono-, di-, and trialkoxy silane compounds including, but not limited to, methacryloxypropyltrimethoxysilane (available from Gelest, Inc., Tullytown, PA), vinyl dimethylethoxysilane, vinyl methyl diethoxysilane, vinyltriethoxysilane, vinyltrimethoxysilane, vinyltriphenoxysilane, and the like, are also useful crosslinking agents.

The amount and identity of the crosslinking agent is tailored depending upon application of the adhesive composition. If present, a crosslinker can be used in any suitable amount. Typically, the crosslinking agent is present in amounts less than 5 parts based on total dry weight of adhesive composition. More specifically, the crosslinker may be present in amounts from 0.01 to 5 parts, preferably 0.05 to 1 parts, based on 100 parts total monomers of the low Tg copolymer.

In an advantageous aspect of the present disclosure, the (meth)acrylate-based copolymeric additive for use herein is prepared using essentially solventless free-radical polymerization methods, in particular an essentially solventless thermal free-radical polymerization methods.

According to one preferred aspect, the (meth)acrylate-based copolymeric additive for use herein is prepared using essentially adiabatic polymerization method, as described for example in U.S. Pat. No. 5,637,646 (Ellis).

According to an exemplary aspect, the (meth)acrylate-based copolymeric additive is obtained as a pre-polymer composition having a polymer conversion rate greater than 10%, greater than 15%, greater than 20%, greater than 25%, greater than 30%, greater than 35%, greater than 40%, or even greater than 45%.

According to another exemplary aspect, the (meth)acrylate-based copolymeric additive is obtained as a pre-polymer composition having a polymer conversion rate comprised between 10 and 60%, between 20 and 55%, between 30 and 50%, or even between 35 and 50%.

The degree of conversion (of monomers to copolymer) can be monitored during the irradiation by measuring the index of refraction of the polymerizing mixture.

According to another preferred aspect, the (meth)acrylate-based copolymeric additive for use herein is prepared according to the methods described for polymerizing packaged pre-adhesive compositions, as described e.g. in U.S. Pat. No. 5,804,610 (Hamer et al.).

According to still another preferred aspect, the (meth)acrylate-based copolymeric additive for use herein is prepared according to methods involving thermally induced polymerization in solvents.

The first polymer layer and/or the second pressure sensitive adhesive layer and/or the third pressure sensitive adhesive layer compositions for use herein may optionally comprise a hydrogenated hydrocarbon tackifier to improve its adhesion properties, i.e. develop more aggressive tack.

Other additives can be added to enhance the performance of the pressure sensitive adhesive compositions. For example, leveling agents, ultraviolet light absorbers, hindered amine light stabilizers (HALS), oxygen inhibitors, wetting agents, rheology modifiers, defoamers, biocides, dyes and the like, can be included herein. All these additives and the use thereof are well known in the art. It is understood that any of these compounds can be used so long as they do not deleteriously affect the adhesive properties. Useful as additives to the first pressure sensitive adhesive composition are UV absorbers and hindered amine light stabilizers.

In one particular aspect of the disclosure, the third pressure sensitive adhesive layer for use herein further comprises silica nanoparticles as described above.

In an alternative aspect of the disclosure, the third pressure sensitive adhesive layer is (substantially) free of particulate filler material as described above.

According to one exemplary aspect, the second pressure sensitive adhesive layer and the third pressure sensitive adhesive layer have (substantially) the same composition.

According to an advantageous aspect of the pressure sensitive adhesive assembly of the present disclosure, the first polymer layer and/or the third pressure sensitive adhesive layer have a composition comprising:
a) a (meth)acrylate (co)polymer component comprising:
   i. C₁-C₃₂ (meth)acrylic acid ester monomer units;
   ii. optionally, ethylenically unsaturated monomer units having functional groups selected from the group consisting of acid, hydroxyl, acid anhydride, epoxide, amine, amide groups, and any combinations thereof; and
   iii. optionally, further ethylenically unsaturated monomer units which are copolymerizable with monomer units (i) and/or (ii); and
b) optionally, a tackifying system.

According to another advantageous aspect of the pressure sensitive adhesive assembly of the present disclosure, the (meth)acrylate (co)polymer component for use herein comprises:
i. from 45 wt.% to 99 wt.% of C₁-C₃₂ (meth)acrylic acid ester monomer units, based on the weight of the (meth)acrylate (co)polymer component;
ii. optionally, from 1 wt.% to 15 wt.% of ethylenically unsaturated monomer units having functional groups, based on the weight of the (meth)acrylate (co)polymer component; and
iii. optionally, from 0 wt.% to 40 wt.% of further ethylenically unsaturated polar monomer units which are copolymerizable with monomer units (a) and/or (b), based on the weight of the (meth)acrylate (co)polymer component.

According to another advantageous aspect of the pressure sensitive adhesive assembly of the present disclosure, the first pressure sensitive adhesive layer and/or the third pressure sensitive adhesive layer have a composition comprising:
a) from 45 to 99 wt.%, or even from 60 to 90 wt.%, of a linear or branched alkyl (meth)acrylate ester as first/main monomer, wherein the main monomer is preferably selected from the group consisting of iso-octyl (meth)acrylate, 2-ethylhexyl (meth)acrylate, 2-propylheptyl (meth)acrylate, butyl acrylate;
b) optionally, from 1 to 15 wt.%, from 1 to 12 wt.%, from 1 to 10 wt.%, from 2.0 to 8.0 wt.%, from 2.5 to 6.0 wt.%, or even from 3.0 to 6.0 wt.% of a polar monomer, preferably a polar acrylate;
c) optionally from 1.0 to 40 wt.%, from 3.0 to 40 wt.%, from 5.0 to 35 wt.%, or even from 10 to 30 wt.%, of the second monomer having an ethylenically unsaturated group, preferably a second non-polar monomer having an ethylenically unsaturated group; and
d) optionally, from 1 to 20 wt.%, from 1 to 15 wt.%, from 1 to 10 wt.%, from 2.0 to 8.0 wt.%, from 2.5 to 6.0 wt.%, or even from 3.0 to 6.0 wt.% of a tackifying system,
wherein the weight percentages are based on the total weight of the first polymer layer or the third pressure sensitive adhesive layer.

According to still another advantageous aspect of the pressure sensitive adhesive assembly of the present disclosure, the first polymer layer and/or the third pressure sensitive adhesive layer have a composition comprising:
a) from 45 to 99 wt.%, or from 60 to 90 wt.%, of a linear or branched alkyl (meth)acrylate ester as first/main monomer, wherein the main monomer is preferably selected from the group consisting of iso-octyl (meth)acrylate, 2-ethylhexyl (meth)acrylate, 2-propylheptyl (meth)acrylate, butyl acrylate;
b) optionally, from 1 to 15 wt.%, from 1 to 12 wt.%, from 1 to 10 wt.%, from 2.0 to 8.0 wt.%, from 2.5 to 6.0 wt.%, or even from 3.0 to 6.0 wt.% of a polar monomer, preferably a polar acrylate;
c) optionally from 1.0 to 40 wt.%, from 3.0 to 40 wt.%, from 5.0 to 35 wt.%, or even from 10 to 30 wt.%, of the second monomer having an ethylenically unsaturated group, preferably a second non-polar monomer having an ethylenically unsaturated group;
d) optionally, from 1 to 20 wt.%, from 1 to 15 wt.%, from 1 to 10 wt.%, from 2.0 to 8.0 wt.%, from 2.5 to 6.0 wt.%, or even from 3.0 to 6.0 wt.% of a tackifying system; and
e) from 1 to 30 wt.%, from 2 to 25 wt.%, from 2 to 20 wt.%, or even from 3 to 15 wt.%, of silica nanoparticles having an average particle size no greater than 400 nm,
wherein the weight percentages are based on the total weight of the first polymer layer or the third pressure sensitive adhesive layer.

According to a typical aspect of the pressure sensitive adhesive assembly of the present disclosure, the second pressure sensitive adhesive layer and/or the third pressure sensitive adhesive layer has a thickness no greater than 250 micrometres, no greater than 220 micrometres, no greater than 200 micrometres, no greater than 180 micrometres, no greater than 150 micrometres, no greater than 100 micrometres, no greater than 80 micrometres, no greater than 60 micrometres, no greater than 50 micrometres, or even no greater than 40 micrometres.

Typically, still, the second pressure sensitive adhesive layer and/or the third pressure sensitive adhesive layer for use in the pressure sensitive adhesive assembly have a thickness in a range from 20 to 250 micrometres, from 30 to 220 micrometres, from 40 to 200 micrometres, from 50 to 200 micrometres, or even from 60 to 180 micrometres.

According to another typical aspect of the pressure sensitive adhesive assembly, the first polymer layer has a thickness greater than 250 micrometres, greater than 300 micrometres, greater than 400 micrometres, greater than 500 micrometres, greater than 600 micrometres, greater than 800 micrometres, or even greater than 1000 micrometres.

In a typical aspect of the disclosure, the first polymer layer has a thickness in a range from 250 to 4000 micrometres, from 300 to 3000 micrometres, from 400 to 3000 micrometres, from 500 to 2500 micrometres, from 600 to 2500 micrometres, from 600 to 2000 micrometres, or even from 800 to 2000 micrometres.

According to a particular aspect, the multilayer pressure sensitive adhesive assembly of the present disclosure has an overall light-transmission (resulting from the light-transmission of the multilayer assembly), of at least 80%, at least 85% or even at least 90%, relative to visible light, when measured according to ASTM E-1438.

According to another particular aspect, the multilayer pressure sensitive adhesive assembly of the present disclosure has an overall haze (resulting from the haze of the multilayer assembly) no greater than 2, no greater than 1.8, no greater than 1.6, no greater than 1.5, no greater than 1.4, or even no greater than 1.2, when measured in the transmissive mode according to ASTM D-1003-95.

In an advantageous aspect of the disclosure, the multilayer pressure sensitive adhesive assembly has a peel adhesion value of more than 15 N/cm, more than 18 N/cm, more than 20 N/cm, more than 22 N/cm, more than 25 N/cm, more than 28 N/cm, more than 30 N/cm, or even more than 32 N/cm, when measured at room temperature on PMMA substrate according to the peel adhesion test method described in the experimental section.

In another advantageous aspect of the disclosure, the multilayer pressure sensitive adhesive assembly has a peel adhesion value of more than 15 N/cm, more than 18 N/cm, more than 20 N/cm, more than 22 N/cm, more than 25 N/cm, more than 28 N/cm, more than 30 N/cm, more than 32 N/cm, or even more than 35 N/cm, when measured at room temperature on polycarbonate substrate according to the peel adhesion test method described in the experimental section.

In still another advantageous aspect of the disclosure, the multilayer pressure sensitive adhesive assembly has a peel adhesion value of more than 15 N/cm, more than 18 N/cm, more than 20 N/cm, more than 22 N/cm, more than 25 N/cm, more than 28 N/cm, more than 30 N/cm, more than 32 N/cm, or even more than 35 N/cm, when measured at room temperature on ABS substrate according to the peel adhesion test method described in the experimental section.

According to another aspect, the present disclosure relates to an article comprising a medium surface energy substrate and a pressure sensitive adhesive composition or a multilayer pressure sensitive adhesive assembly as described above, adjacent to the medium surface energy substrate.

Particular and preferred aspects relating to the pressure sensitive adhesive composition and multilayer pressure sensitive adhesive assembly, the first polymer layer, the second pressure sensitive adhesive layer, and the optional third pressure sensitive adhesive layer for use in the article of the present disclosure, are identical to those detailed above in the context of describing the pressure sensitive adhesive composition and the multilayer pressure sensitive adhesive assembly.

Medium surface energy substrates for use herein are not particularly limited. Any medium surface energy substrates commonly known in the art, may be used in the context of the present disclosure. Suitable medium surface energy substrates for use herein may be easily identified by those skilled in the art in the light of the present disclosure.

Due to the excellent transparency characteristics provided by the pressure sensitive adhesive composition and multilayer pressure sensitive adhesive assembly of the present disclosure, the medium surface energy substrate for use in the article may be advantageously selected to have beneficial transparency characteristics as well.

According to an advantageous aspect of the above article, the medium surface energy substrate for use herein has an overall light-transmission of at least 80%, at least 85% or even at least 90%, relative to visible light, when measured according to ASTM E-1438.

In an advantageous aspect of the article of the present disclosure, the medium surface energy substrate for use herein is selected from the group consisting of polymethyl methacrylate (PMMA), acrylonitrile butadiene styrene (ABS), polyamide 6 (PA6), PC/ABS blends, PC, PVC, PA, PUR, TPE, POM, polystyrene, composite materials, in particular fibre reinforced plastics; and any combinations thereof.

In a particularly advantageous aspect, the medium surface energy substrate for use in the above article is selected from the group consisting of PMMA, ABS, and any combinations thereof.

According to a particularly advantageous aspect, the article of the present disclosure has a light-transmission of at least 80%, at least 85% or even at least 90%, relative to visible light, when measured according to ASTM E-1438.

The pressure sensitive adhesive composition, the first polymer layer, the second pressure sensitive adhesive layer and the optional third pressure sensitive adhesive layer compositions as described above may be obtained by conventional manufacturing methods, well known to those skilled in the art. The particular pressure-sensitive adhesive compositions may be prepared for example by a variety of conventional free radical polymerization methods, including solution, bulk (i.e., with little or no solvent), dispersion, emulsion, and suspension processes. In a particular aspect, the pressure sensitive adhesive composition and the various pressure sensitive adhesive layer compositions are prepared by well-known solvent-less polymerization methods, in particular hotmelt polymerization methods.

In some methods of preparing the pressure sensitive adhesive composition and pressure sensitive adhesive composition(s) for the pressure sensitive adhesive layer(s) of the PSA assembly according to the disclosure, the polymerizable material containing the monomers is partially polymerized so as to increase its viscosity to that corresponding to a syrup-like material. Generally, the main monomers and other optional monomers are mixed with a portion of the free radical polymerization initiator. Depending on the type of initiator added, the mixture is typically exposed to actinic radiation or heat to partially polymerize the monovalent monomers (i.e., monomers with a single ethylenically unsaturated group). Then, the crosslinker and any remaining portion of the initiator may be added to the syrup-like, partially polymerized material. Optional tackifiers and plasticizers may also be combined with the partially polymerized material. The resulting mixture can be more readily applied as a coating composition onto a support (e.g., release liner) or another layer (e.g., polymeric foam layer). The coating layer can then be exposed to actinic radiation if a photoinitator is present or to heat if a thermal initiator is present. Exposure to actinic radiation or heat typically results in the further reaction of polymerizable material within the coating composition.

According to a further aspect, the present disclosure relates to a method of manufacturing a pressure sensitive adhesive composition as described above, which comprises the steps of:
a) providing the (meth)acrylate-based copolymeric additive;
b) incorporating the (meth)acrylate-based copolymeric additive into a curable precursor composition comprising the main monomer units used to prepare the (meth)acrylate-based (co)polymer base component, optionally a polymerization initiator, optionally a crosslinker, thereby forming a curable precursor composition of the pressure sensitive composition; and
c) optionally, curing the curable precursor composition of the pressure sensitive composition obtained in step a), preferably with actinic radiation.

According to a particular aspect of the method of manufacturing a pressure sensitive adhesive composition, the (meth)acrylate-based copolymeric additive of step a) is obtained by free-radical polymerization, in particular by an essentially solventless polymerization method, more in particular by an essentially adiabatic polymerization reaction.

According to another particular aspect of the method of manufacturing a pressure sensitive adhesive composition, the (meth)acrylate-based copolymeric additive of step a) is obtained as a pre-polymer composition having a polymer conversion rate greater than 10%, greater than 15%, greater than 20%, greater than 25%, greater than 30%, greater than 35%, greater than 40%, or even greater than 45%.

According to still another particular aspect of the method of manufacturing a pressure sensitive adhesive composition, the (meth)acrylate-based copolymeric additive of step a) is obtained as a pre-polymer composition having a polymer conversion rate comprised between 10 and 60%, between 20 and 55%, between 30 and 50%, or even between 35 and 50%.

According to still a further aspect, the present disclosure relates to a method of manufacturing a multilayer pressure sensitive adhesive assembly as described above, which comprises the steps of:
a) providing a precursor composition of the first polymer layer;
b) providing a precursor composition of the second pressure sensitive adhesive layer;
c) coating the precursor composition of the first polymer layer on a substrate, and optionally, curing the precursor composition of the first polymer layer; and
d) coating the precursor composition of the second pressure sensitive adhesive layer on the precursor composition of the first polymer layer obtained in step c) and optionally, curing the precursor composition of second first pressure sensitive adhesive layer, thereby forming a precursor of the multilayer pressure sensitive adhesive assembly; and
e) optionally, curing the precursor of the multilayer pressure sensitive adhesive assembly obtained in step d).

According to a particular aspect of this method of manufacturing a pressure sensitive adhesive assembly, a liquid precursor of the first polymer layer is deposited on a substrate and then cured, preferably with actinic radiation, in particular UV radiation, e-beam radiation or by thermal curing.

According to another particular aspect of this method of manufacturing a pressure sensitive adhesive assembly, a liquid precursor of a second pressure sensitive adhesive layer and/or a third pressure sensitive adhesive layer is superimposed on the liquid precursor of the first polymer layer before curing.

According to an advantageous aspect, the multilayer pressure sensitive adhesive assembly as described herein is obtained by a wet-on-wet coating process step. Exemplary "wet-in-wet" production processes for use herein are described in detail in e.g. WO-A1-2011094385 (Hitschmann et al.) or in EP-A1-0259094 (Zimmerman et al.), the full disclosures of which are herewith fully incorporated by reference.

However, the manufacturing of the multilayer pressure sensitive adhesive assembly is not limited to the before mentioned method. For instance, the pressure sensitive adhesive assembly may be produced by co-extrusion, solvent-based methods or also combinations thereof.

According to an alternative method, the first polymer layer and/or the second pressure sensitive adhesive layer and/or the third pressure sensitive adhesive layer are prepared separately and subsequently laminated to each other.

According to still another aspect, the present disclosure relates to the use of a pressure sensitive adhesive composition or a multilayer pressure sensitive adhesive assembly as described above for the bonding to a medium surface energy substrate or a high surface energy substrate, in particular, a medium surface energy substrate.

In one particular aspect of this use, the high energy surface substrate for use herein is selected from the group of transparent siliceous substrates, in particular glass substrates.

In another particular aspect of this use, the medium surface energy substrate for use herein has a light-transmission of at least 80%, at least 85% or even at least 90%, relative to visible light, when measured according to ASTM E-1438.

In an exemplary aspect of this use, the medium surface energy substrate for use herein is selected from the group consisting of polymethyl methacrylate (PMMA), acrylonitrile butadiene styrene (ABS), polyamide 6 (PA6), PC/ABS blends, PC, PVC, PA, PUR, TPE, POM, polystyrene, composite materials, in particular fibre reinforced plastics; and any combinations thereof.

According to an advantageous aspect of this use, the medium surface energy substrate for use herein is selected from the group consisting of PMMA, ABS, and any combinations thereof.

In still another aspect, the present disclosure is directed to the use of a pressure sensitive adhesive composition or a multilayer pressure sensitive adhesive assembly as described above for industrial applications, in particular for transportation, construction, decoration, home improvement and electronics applications.

Item 1 is a pressure sensitive adhesive composition comprising a blend of:
a) a (meth)acrylate-based (co)polymer base component; and
b) a (meth)acrylate-based copolymeric additive comprising the free-radical random copolymerization reaction product of a copolymerizable material comprising:
   i. (low Tg) C₁-C₃₂ acrylic acid ester monomer units;
   ii. greater than 10 wt.% of (high Tg) C₁-C₁₈ methacrylic acid ester monomer units, based on the total weight of the (meth)acrylate copolymeric additive; and
   iii. (high Tg) ethylenically unsaturated monomer units having a functional group, which are copolymerizable with monomer units (i) and/or (ii);
wherein the (meth)acrylate-based copolymeric additive has a weight average molecular weight (M_{w}) greater than 10,000 Daltons and a Tg no greater than 50°C, as estimated by the Fox equation.

Item 2 is a composition according to item 1, wherein the (meth)acrylate-based (co)polymer base component comprises the (free-radical random) copolymerization reaction product of a copolymerizable material comprising:
i. (low Tg) C₁-C₃₂ (meth)acrylic acid ester monomer units;
ii. optionally, (high Tg) ethylenically unsaturated monomer units having functional groups, in particular functional groups selected from the group consisting of acid, hydroxyl, acid anhydride, epoxide, amine, amide groups, and any combinations thereof; and
iii. optionally, further ethylenically unsaturated monomer units which are copolymerizable with monomer units (i) and/or (ii).

Item 3 is a composition according to any of item 1 or 2, wherein the (meth)acrylate-based (co)polymer base component comprises the (free-radical random) copolymerization reaction product of a copolymerizable material comprising:
i. from 45 to 99 wt.%, from 50 to 99 wt.%, from 60 to 99 wt.%, from 70 to 98 wt.%, from 80 to 98 wt.%, from 85 to 98 wt.%, or even from 90 to 98 wt.% of the (low Tg) C₁-C₃₂ (meth)acrylic acid ester monomer units;
ii. optionally, from 1 to 15 wt.%, from 2 to 12 wt.%, from 3 to 10 wt.%, from 4 to 10 wt.%, or even from 5 to 10 wt.%, of the (high Tg) ethylenically unsaturated monomer units having functional groups, in particular (high Tg) acid-functional ethylenically unsaturated monomer units; and
iii. optionally, from 0 to 40 wt.%, from 1 to 40 wt.%, from 5 to 35 wt.%, from 10 to 30 wt.%, of the further (non-acid functional) ethylenically unsaturated (polar) monomer units which are copolymerizable with monomer units (i) and/or (ii);
wherein the weight percentages are based on the total weight of the (meth)acrylate-based (co)polymer base component.

Item 4 is a composition according to any of the preceding items, wherein the (low Tg) C₁-C₃₂ (meth)acrylic acid ester monomer units are selected from the group consisting of linear or branched C₁-C₃₂ (meth)acrylic acid ester monomer units, C₁-C₂₄ (meth)acrylic acid ester monomer units, or even C₁-C₁₈ (meth)acrylic acid ester monomer units.

Item 5 is a composition according to any of the preceding items, wherein the (low Tg) C₁-C₃₂ (meth)acrylic acid ester monomer units are selected from the group consisting of iso-octyl (meth)acrylate, 2-ethylhexyl (meth)acrylate, 2-propylheptyl (meth)acrylate, butyl (meth)acrylate.

Item 6 is a composition according to any of the preceding items, wherein the (low Tg) C₁-C₃₂ (meth)acrylic acid ester monomer units have no functional groups.

Item 7 is a composition according to any items 2 to 6, wherein the (low Tg) C₁-C₃₂ (meth)acrylic acid ester monomer units are different from the optional (high Tg) ethylenically unsaturated monomer units having functional groups and different from the optional further ethylenically unsaturated monomer units which are copolymerizable with monomer units (i) and/or (ii).

Item 8 is a composition according to any of the preceding items, wherein the (meth)acrylate-based (co)polymer base component has a Tg no greater than 20°C, no greater than 10°C, no greater than 0°C, no greater than -5°C, no greater than -10°C, no greater than -15°C, or even no greater than -20°C, as estimated by the Fox equation.

Item 9 is a composition according to any of the preceding items, wherein the (meth)acrylate-based copolymeric additive comprising the free-radical random copolymerization reaction product of a copolymerizable material comprises greater than 12 wt.%, greater than 15 wt.%, greater than 18 wt.%, greater than 20 wt.%, greater than 22 wt.%, greater than 25 wt.%, greater than 28 wt.%, greater than 30 wt.%, greater than 32 wt.%, greater than 35 wt.%, greater than 40 wt.%, greater than 45 wt.%, greater than 50 wt.%, greater than 55 wt.%, greater than 60 wt.%, or even greater than 65 wt.%, of the (high Tg) C₁-C₁₈ methacrylic acid ester monomer units, based on the total weight of the (meth)acrylate copolymeric additive.

Item 10 is a composition according to any of the preceding items, wherein the (meth)acrylate-based copolymeric additive comprising the free-radical random copolymerization reaction product of a copolymerizable material comprises no greater than 70 wt.%, no greater than 65 wt.%, no greater than 60 wt.%, no greater than 55 wt.%, no greater than 50 wt.%, no greater than 45 wt.%, no greater than 40 wt.%, or even greater than 35 wt.%, of the (high Tg) C₁-C₁₈ methacrylic acid ester monomer units, based on the total weight of the (meth)acrylate copolymeric additive.

Item 11 is a composition according to any of the preceding items, wherein the (meth)acrylate-based copolymeric additive comprising the free-radical random copolymerization reaction product of a copolymerizable material comprises from 11 to 60 wt.%, from 12 to 55 wt.%, from 15 to 55 wt.%, from 20 to 55 wt.%, from 20 to 50 wt.%, from 25 to 50 wt.%, from 25 to 45 wt.%, from 30 to 45 wt.%, or even from 30 to 40 wt.%, of the (high Tg) C₁-C₁₈ methacrylic acid ester monomer units, based on the total weight of the (meth)acrylate copolymeric additive.

Item 12 is a composition according to any of the preceding items, wherein the (meth)acrylate-based copolymeric additive comprising the free-radical random copolymerization reaction product of a copolymerizable material comprises:
i. from 29 to 88 wt.%, from 30 to 88 wt.%, from 35 to 88 wt.%, from 40 to 85 wt.%, from 40 to 80 wt.%, from 40 to 75 wt.%, from 45 to 70 wt.%, from 50 to 65 wt.%, or even from 55 to 60 wt.% of the (low Tg) C₁-C₃₂ acrylic acid ester monomer units;
ii. from 11 to 70 wt.%, from 11 to 65 wt.%, from 12 to 60 wt.%, from 12 to 55 wt.%, from 15 to 55 wt.%, from 20 to 55 wt.%, from 20 to 50 wt.%, from 25 to 50 wt.%, from 25 to 45 wt.%, from 30 to 45 wt.%, or even from 30 to 40 wt.%, of the (high Tg) C₁-C₁₈ methacrylic acid ester monomer units; and
iii. from 0.5 to 15 wt.%, from 1 to 15 wt.%, from 2 to 12 wt.%, from 3 to 10 wt.%, from 4 to 10 wt.%, or even from 5 to 10 wt.%, of the (high Tg) ethylenically unsaturated monomer units having functional groups;
wherein the weight percentages are based on the total weight of the (meth)acrylate copolymeric additive.

Item 13 is a composition according to any of the preceding items, wherein the (low Tg) C₁-C₃₂ acrylic acid ester monomer units are selected from the group consisting of linear or branched C₁-C₃₂ acrylic acid ester monomer units, C₁-C₂₄ acrylic acid ester monomer units, or even C₁-C₁₈ acrylic acid ester monomer units, and any mixtures thereof.

Item 14 is a composition according to any of the preceding items, wherein the (low Tg) C₁-C₃₂ acrylic acid ester monomer units are selected from the group consisting of iso-octyl acrylate, 2-ethylhexyl acrylate, 2-propylheptyl acrylate, butyl acrylate, and any mixtures thereof.

Item 15 is a composition according to any of the preceding items, wherein the (high Tg) C₁-C₁₈ methacrylic acid ester monomer units have no functional groups.

Item 16 is a composition according to any of the preceding items, wherein the(meth)acrylate-based copolymeric additive comprising the free-radical random copolymerization reaction product of a copolymerizable material comprises only one single (high Tg) C₁-C₁₈ methacrylic acid ester monomer unit type.

Item 17 is a composition according to any of the preceding items, wherein the (high Tg) C₁-C₁₈ methacrylic acid ester monomer units are selected from the group consisting of methyl methacrylate, ethyl methacrylate, propyl methacrylate, n-butyl methacrylate, t-butyl methacrylate, isobutyl methacrylate, n-hexyl methacrylate, tetrahydrofurfuryl methacrylate, cyclohexyl methacrylate, 3,3,5-trimethylcyclohexyl methacrylate, tert-butyl cyclohexyl methacrylate, heptyl methacrylate, cycloheptyl methacrylate, 2-ethyhexyl methacrylate, n-octyl methacrylate, 2-phenoxy ethyl methacrylate, nonyl methacrylate, decyl methacrylate, lauryl methacrylate, isobornyl methacrylate, phenyl methacrylate, benzyl methacrylate, and any mixtures thereof.

Item 18 is a composition according to any of the preceding items, wherein the (high Tg) C₁-C₁₈ methacrylic acid ester monomer units are selected from the group consisting of methyl methacrylate, cyclohexyl methacrylate, isobornyl methacrylate, tetrahydrofurfuryl methacrylate, 3,3,5-trimethylcyclohexyl methacrylate, 2-phenoxy ethyl methacrylate, tert-butyl cyclohexyl methacrylate, tert-butyl methacrylate, and any mixtures thereof.

Item 19 is a composition according to any of the preceding items, wherein the (high Tg) C₁-C₁₈ methacrylic acid ester monomer units are selected from the group consisting of methyl methacrylate, cyclohexyl methacrylate, and any mixtures thereof.

Item 20 is a composition according to any of the preceding items, wherein the (high Tg) C₁-C₁₈ methacrylic acid ester monomer units are selected to comprise methyl methacrylate.

Item 21 is a composition according to any of the preceding items, wherein the (high Tg) ethylenically unsaturated monomer units having a functional group have a functional group selected from the group consisting of acid, amine, hydroxyl, amide, isocyanate, acid anhydride, epoxide, nitrile, and any combinations thereof.

Item 22 is a composition according to any of the preceding items, wherein the (high Tg) ethylenically unsaturated monomer units having a functional group have a functional group selected from the groups of acid groups.

Item 23 is a composition according to any of the preceding items, wherein the (high Tg) ethylenically unsaturated monomer units having a functional group are selected from the group consisting of (meth)acrylic acid, methoxyethyl (meth)acrylate, ethoxyethyl (meth)acrylate, 2-hydroxyethyl (meth)acrylate, 2-aminoethyl (meth)acrylate, dimethylaminoethyl (meth)acrylate, diethylaminoethyl (meth)acrylate, N-vinyl pyrrolidone, N-vinyl caprolactam, (meth)acrylamide, N-vinylacetamide, maleic anhydride, 4-acryloyl morpholine, glycidyl (meth)acrylate, 2-isocyanato ethyl (meth)acrylate, tert-butylamino ethyl (meth)acrylate, acrylonitrile, and any mixtures thereof.

Item 24 is a composition according to any of the preceding items, wherein the (high Tg) ethylenically unsaturated monomer units having a functional group are selected from the group consisting of acrylic acid, dimethylaminoethyl (meth)acrylate, and any mixtures thereof.

Item 25 is a composition according to any of the preceding items, wherein the (low Tg) C₁-C₃₂ (meth)acrylic acid ester monomer units, the (high Tg) C₁-C₁₈ methacrylic acid ester monomer units and the (high Tg) ethylenically unsaturated monomer units having a functional group are mutually self-excluding.

Item 26 is a composition according to any of the preceding items, wherein the (meth)acrylate-based copolymeric additive comprises the free-radical random copolymerization reaction product of a copolymerizable material comprising no greater than 4, no greater than 3, no greater than 2, or even no greater than 1 different (high Tg) C₁-C₁₈ methacrylic acid ester monomer units.

Item 27 is a composition according to any of the preceding items, wherein the (meth)acrylate-based copolymeric additive has a Tg no greater than 45°C, no greater than 40°C, no greater than 35°C, no greater than 30°C, no greater than 25°C, no greater than 20°C, no greater than 10°C, no greater than 0°C, or even no greater than -5°C, as estimated by the Fox equation.

Item 28 is a composition according to any of the preceding items, wherein the (meth)acrylate-based copolymeric additive has a Tg greater than -30°C, greater than -25°C, greater than -20°C, greater than -15°C, or even greater than -10°C, as estimated by the Fox equation.

Item 29 is a composition according to any of the preceding items, wherein the (meth)acrylate-based copolymeric additive has a Tg in a range from -30°C to 50°C, from - 25°C to 50°C, from -25°C to 45°C, from -20°C to 40°C, from -20°C to 35°C, from -20°C to 30°C, from -20°C to 25°C, from -15°C to 25°C, from -15°C to 20°C, from -15°C to 15°C, from -15°C to 10°C, from -15°C to 5°C, from -15°C to 0°C, from -10°C to 0°C, or even from -5°C to 0°C, as estimated by the Fox equation.

Item 30 is a composition according to any of the preceding items, wherein the (meth)acrylate-based copolymeric additive has a weight average molecular weight (M_{w}) greater than 12,000 Daltons, greater than 15,000 Daltons, greater than 20,000 Daltons, greater than 25,000 Daltons, greater than 30,000 Daltons, greater than 35,000 Daltons, or even greater than 40,000 Daltons.

Item 31 is a composition according to any of the preceding items, wherein the (meth)acrylate-based copolymeric additive has a weight average molecular weight (M_{w}) no greater than 100,000 Daltons, no greater than 80,000 Daltons, no greater than 70,000 Daltons, no greater than 60,000 Daltons, no greater than 50,000 Daltons, no greater than 45,000 Daltons, no greater than 40,000 Daltons, no greater than 35,000 Daltons, no greater than 30,000 Daltons, or even no greater than 25,000 Daltons.

Item 32 is a composition according to any of the preceding items, wherein the (meth)acrylate-based copolymeric additive has a weight average molecular weight (M_{w}) in a range from 12,000 to 100,000 Daltons, from 15,000 to 100,000 Daltons, from 20,000 to 100,000 Daltons, from 25,000 to 100,000 Daltons, from 25,000 to 80,000 Daltons, from 25,000 to 60,000 Daltons, from 30,000 to 60,000 Daltons, from 30,000 to 55,000 Daltons, from 30,000 to 50,000 Daltons, from 30,000 to 45,000 Daltons, or even from 30,000 to 40,000 Daltons.

Item 33 is a composition according to any of the preceding items, wherein the (meth)acrylate-based copolymeric additive has a number average molecular weight (Mₙ) greater than 5,000 Daltons, greater than 6,000 Daltons, greater than 8,000 Daltons, greater than 10,000 Daltons, greater than 12,000 Daltons, greater than 14,000 Daltons, greater than 15,000 Daltons, greater than 16,000 Daltons, greater than 18,000 Daltons, or even greater than 20,000 Daltons.

Item 34 is a composition according to any of the preceding items, wherein the (meth)acrylate-based copolymeric additive has a number average molecular weight (Mₙ) no greater than 50,000 Daltons, no greater than 45,000 Daltons, no greater than 40,000 Daltons, no greater than 35,000 Daltons, no greater than 30,000 Daltons, no greater than 25,000 Daltons, or even no greater than 20,000 Daltons.

Item 35 is a composition according to any of the preceding items, wherein the (meth)acrylate-based copolymeric additive has a number average molecular weight (Mₙ) in a range from 10,000 to 50,000 Daltons, from 10,000 to 40,000 Daltons, from 10,000 to 35,000 Daltons, from 10,000 to 30,000 Daltons, from 15,000 to 30,000 Daltons, or even from 15,000 to 25,000 Daltons.

Item 36 is a composition according to any of the preceding items, wherein the (meth)acrylate-based copolymeric additive is a (substantially) random copolymer which is (substantially) free of block copolymers and/or (substantially) free of copolymer blocks, in particular copolymer blocks resulting exclusively from the copolymerization of (high Tg) C₁-C₁₈ methacrylic acid ester monomer units.

Item 37 is a composition according to any of the preceding items, wherein the (meth)acrylate-based copolymeric additive has a molecular weight distribution (M_{w}/Mₙ) greater than 1, greater than 1.2, greater than 1.4, greater than 1.5, greater than 1.6, greater than 1.8, or even greater than 2.0.

Item 38 is a composition according to any of the preceding items, which comprises a blend of:
a) at least 60 wt.%, at least 65 wt.%, at least 70 wt.%, at least 75 wt.%, at least 80 wt.%, at least 85 wt.%, or even at least 90 wt.%, of the (meth)acrylate-based (co)polymer base component; and
b) up to 40 wt.%, up to 35 wt.%, up to 30 wt.%, up to 25 wt.%, up to 20 wt.%, up to 15 wt.%, or even up to 10 wt.%, of the (meth)acrylate-based copolymeric additive, based on the total weight of the pressure sensitive adhesive composition.

Item 39 is a composition according to any of the preceding items, which comprises a blend of:
a) from 60 to 95 wt.%, from 70 to 95 wt.%, from 80 to 95 wt.%, or even from 85 to 95 wt.%, of the (meth)acrylate-based (co)polymer base component; and
b) from 5 to 40 wt.%, from 5 to 30 wt.%, from 5 to 20 wt.%, or even from 5 to 15 wt.%, of the (meth)acrylate-based copolymeric additive, based on the total weight of the pressure sensitive adhesive composition.

Item 40 is a composition according to any of the preceding items, which is (substantially) free of tackifying resins, in particular hydrocarbon tackifying resins, more in particular C5-based hydrocarbon resins, C9-based hydrocarbon resins, C5/C9-based hydrocarbon resins, and any mixtures thereof.

Item 41 is a composition according to any of the preceding items, which is (substantially) free of (chemical) crosslinking agents, in particular (chemical) crosslinking agents capable of crosslinking the (meth)acrylate-based (co)polymer base component with the (meth)acrylate-based copolymeric additive.

Item 42 is a composition according to any of the preceding items, wherein the (meth)acrylate-based (co)polymer base component and the (meth)acrylate-based copolymeric additive are not crosslinkable with each other.

Item 43 is a composition according to any of items 1 to 39, which further comprises (chemical) crosslinking agents.

Item 44 is a composition according to any of the preceding items, which comprises silica nanoparticles having an average particle size no greater than 400 nm, when measured by Dynamic Light Scattering (DLS) techniques according to test method described in the experimental section.

Item 45 is a composition according to any of the preceding items, wherein the silica nanoparticles have an average primary particle size no greater than 350 nm, no greater than 300 nm, no greater than 250 nm, no greater than 200 nm, no greater than 150 nm, no greater than 100 nm, no greater than 80 nm, no greater than 60 nm, no greater than 50 nm, no greater than 40 nm, no greater than 30 nm, or even no greater than 20 nm, when measured by Dynamic Light Scattering (DLS) techniques according to test method described in the experimental section.

Item 46 is a composition according to any of the preceding items, wherein the silica nanoparticles have an average primary particle size in a range from 1 to 400 nm, from 2 to 350 nm, from 3 to 300 nm, from 3 to 250 nm, from 5 to 200 nm, from 5 to 150 nm, from 5 to 100 nm, from 5 to 80 nm, from 5 to 60 nm, or even from 10 to 50 nm, when measured by Dynamic Light Scattering (DLS) techniques according to test method described in the experimental section.

Item 47 is a composition according to any of the preceding items, wherein the silica nanoparticles are provided with a surface modification selected from the group of hydrophobic surface modifications, hydrophilic surface modifications, and any combinations thereof.

Item 48 is a composition according to any of the preceding items, wherein the silica nanoparticles are provided with a hydrophobic surface modification.

Item 49 is a composition according to any of the preceding items, wherein the silica nanoparticles are selected from the group consisting of fumed silica nanoparticles.

Item 50 is a composition according to any of the preceding items, wherein the silica nanoparticles are selected from the group consisting of hydrophobic fumed silica nanoparticles, hydrophilic fumed silica nanoparticles, and any combinations thereof.

Item 51 is a composition according to any of the preceding items, wherein the silica nanoparticles are selected from the group of hydrophobic fumed silica nanoparticles.

Item 52 is a composition according to any of the preceding items, wherein the silica nanoparticles have a specific surface area (BET) in a range from 50 to 200 m²/g, from 60 to 180 m²/g, from 60 to 160 m²/g, from 50 to 150 m²/g, from 60 to 150 m²/g, from 80 to 150 m²/g, or even from 90 to 130 m²/g, when measured according to BS ISO 9277: 2010.

Item 53 is a composition according to any of the preceding items, which comprises silica nanoparticles having an average primary particle size no greater than 400 nm in an amount ranging from 1 to 30 wt.%, from 2 to 25 wt.%, from 2 to 20 wt.%, or even from 3 to 15 wt.%, based on the weight of the pressure sensitive adhesive composition.

Item 54 is a multilayer pressure sensitive adhesive assembly comprising at least a first polymer layer and a second pressure sensitive adhesive layer adjacent to the first polymer layer, wherein the second pressure sensitive adhesive layer has a composition as described in any of items 1 to 53.

Item 55 is an assembly according to item 54, wherein the first polymer layer is a pressure sensitive adhesive layer.

Item 56 is an assembly according to any of item 54 or 55, wherein the first polymer layer is (substantially) free of particulate filler material, in particular particulate filler material having an average primary particle size no greater than 400 nm when measured by Dynamic Light Scattering (DLS) techniques according to test method described in the experimental section.

Item 57 is an assembly according to any of items 54 to 56, wherein the first polymer layer is (substantially) free of particulate filler material having an average primary particle size greater than 400 nm when measured by Dynamic Light Scattering (DLS) techniques according to test method described in the experimental section.

Item 58 is an assembly according to any of items 54 to 57, wherein the first polymer layer is (substantially) free of particulate filler material selected from the group consisting of hollow (non-porous) particulate filler material, in particular hollow microspheres, expandable or expanded microspheres, glass beads, glass bubbles, glass microspheres, ceramic microspheres, hollow polymeric particles, and any combinations or mixtures thereof.

Item 59 is an assembly according to any of items 54 to 58, wherein the first polymer layer is substantially free of particulate filler material selected from the group consisting of silica type fillers, hydrophobic silica type fillers, hydrophilic silica type fillers, hydrophobic fumed silica, hydrophilic fumed silica, fibers, electrically and/or thermally conducting particles, nanoparticles, in particular silica nanoparticles, and any combinations or mixtures thereof.

Item 60 is an assembly according to any of items 54 to 59, wherein the first polymer layer does not take the form of a polymeric foam layer.

Item 61 is an assembly according to any of items 54 to 59, wherein the first polymer layer is a polymeric foam layer, which is in particular obtained by frothing techniques, more in particular by whipping a gas into the polymerizable composition of the first polymer layer.

Item 62 is an assembly according to any of items 54 to 61, which is in the form of a skin/core multilayer pressure sensitive adhesive assembly, wherein the first polymer layer is the core layer of the multilayer pressure sensitive adhesive assembly and the second pressure sensitive adhesive layer is the skin layer of the multilayer pressure sensitive adhesive assembly.

Item 63 is an assembly according to any of items 54 to 62, which further comprises a third pressure sensitive adhesive layer which is preferably adjacent to the first polymer layer in the side of the first polymer layer which is opposed to the side of the first polymer layer adjacent to the second pressure sensitive adhesive layer.

Item 64 is an assembly according to item 63, which is in the form of a skin/core/skin multilayer pressure sensitive adhesive assembly, wherein the first polymer layer is the core layer of the multilayer pressure sensitive adhesive assembly, the second pressure sensitive adhesive layer is the first skin layer of the multilayer pressure sensitive adhesive assembly and the third pressure sensitive adhesive layer is the second skin layer of the multilayer pressure sensitive adhesive assembly.

Item 65 is an assembly according to any of item 63 or 64, wherein the first polymer layer and the third pressure sensitive adhesive layer comprise a polymer base material selected from the group consisting of polyacrylates, polyurethanes, polyolefins, polyamines, polyamides, polyesters, polyethers, polyisobutylene, polystyrenes, polyvinyls, polyvinyl pyrrolidone, natural rubbers, synthetic rubbers, and any combinations, copolymers or mixtures thereof.

Item 66 is an assembly according to any of items 63 to 65, wherein the first polymer layer and the third pressure sensitive adhesive layer comprise a polymer base material selected from the group consisting of polyacrylates.

Item 67 is an assembly according to any of items 63 to 66, wherein the first polymer layer and the third pressure sensitive adhesive layer comprise a polymer base material selected from the group consisting of polyacrylates whose main monomer component preferably comprises a linear or branched alkyl (meth)acrylate ester, preferably a non-polar linear or branched alkyl (meth)acrylate ester having a linear or branched alkyl group comprising preferably from 1 to 30, from 1 to 20, or even from 1 to 15 carbon atoms.

Item 68 is an assembly according to any of items 63 to 67, wherein the first polymer layer and the third pressure sensitive adhesive layer comprise a polymer base material selected from the group consisting of polyacrylates whose main monomer component comprises a linear or branched alkyl (meth)acrylate ester selected from the group consisting of methyl (meth)acrylate, ethyl (meth)acrylate, n-propyl (meth)acrylate, isopropyl (meth)acrylate, n-butyl acrylate, isobutyl acrylate, tert-butyl (meth)acrylate, n-pentyl (meth)acrylate, iso-pentyl (meth)acrylate, n-hexyl (meth)acrylate, iso-hexyl (meth)acrylate, cyclohexyl (meth)acrylate, phenyl (meth)acrylate, octyl (meth)acrylate, iso-octyl (meth)acrylate, 2-octyl(meth)acrylate, 2-ethylhexyl (meth)acrylate, decyl (meth)acrylate, lauryl (meth)acrylate, 2-propylheptyl (meth)acrylate, stearyl (meth)acrylate, isobornyl acrylate, benzyl (meth)acrylate, octadecyl acrylate, nonyl acrylate, dodecyl acrylate, isophoryl (meth)acrylate, and any combinations or mixtures thereof.

Item 69 is an assembly according to item 68, wherein the linear or branched alkyl (meth)acrylate ester is selected from the group consisting of iso-octyl (meth)acrylate, 2-ethylhexyl (meth)acrylate, 2-propylheptyl (meth)acrylate, butyl acrylate, and any combinations or mixtures thereof.

Item 70 is an assembly according to any of item 68 or 69, wherein the linear or branched alkyl (meth)acrylate ester is selected from the group consisting of iso-octyl acrylate, 2-ethylhexyl acrylate and 2-propylheptyl acrylate.

Item 71 is an assembly according to any of items 68 to 70, wherein the polymer base material further comprises a polar comonomer, preferably a polar acrylate, more preferably selected from the group consisting of acrylic acid, methacrylic acid, itaconic acid, hydroxyalkyl acrylates, acrylamides and substituted acrylamides, acrylamines and substituted acrylamines and any combinations or mixtures thereof.

Item 72 is an assembly according to any of items 63 to 71, wherein the third pressure sensitive adhesive layer further comprises silica nanoparticles as described in any of items 44 to 53.

Item 73 is an assembly according to any of items 63 to 71, wherein the third pressure sensitive adhesive layer is (substantially) free of particulate filler material as described in any of items 56 to 59.

Item 74 is an assembly according to any of items 63 to 73, wherein the second pressure sensitive adhesive layer and the third pressure sensitive adhesive layer have (substantially) the same composition.

Item 75 is an assembly according to any of items 63 to 73, wherein the first polymer layer and/or the third pressure sensitive adhesive layer have a composition comprising:
a) a (meth)acrylate (co)polymer component comprising:
   i. C₁-C₃₂ (meth)acrylic acid ester monomer units;
   ii. optionally, ethylenically unsaturated monomer units having functional groups selected from the group consisting of acid, hydroxyl, acid anhydride, epoxide, amine, amide groups, and any combinations thereof; and
   iii. optionally, further ethylenically unsaturated monomer units which are copolymerizable with monomer units (i) and/or (ii); and
b) optionally, a tackifying system.

Item 76 is an assembly according to item 75, wherein the (meth)acrylate (co)polymer component comprises:
i. from 45 wt.% to 99 wt.% of C₁-C₃₂ (meth)acrylic acid ester monomer units, based on the weight of the (meth)acrylate (co)polymer component;
ii. optionally, from 1 wt.% to 15 wt.% of ethylenically unsaturated monomer units having functional groups, based on the weight of the (meth)acrylate (co)polymer component; and
iii. optionally, from 0 wt.% to 40 wt.% of further ethylenically unsaturated polar monomer units which are copolymerizable with monomer units (a) and/or (b), based on the weight of the (meth)acrylate (co)polymer component.

Item 77 is an assembly according to any of item 75 or 76, wherein the first polymer layer and/or the third pressure sensitive adhesive layer have a composition comprising:
a) from 45 to 99 wt.%, or even from 60 to 90 wt.%, of a linear or branched alkyl (meth)acrylate ester as first/main monomer, wherein the main monomer is preferably selected from the group consisting of iso-octyl (meth)acrylate, 2-ethylhexyl (meth)acrylate, 2-propylheptyl (meth)acrylate, butyl acrylate;
b) optionally, from 1 to 15 wt.%, from 1 to 12 wt.%, from 1 to 10 wt.%, from 2.0 to 8.0 wt.%, from 2.5 to 6.0 wt.%, or even from 3.0 to 6.0 wt.% of a polar monomer, preferably a polar acrylate;
c) optionally from 1.0 to 40 wt.%, from 3.0 to 40 wt.%, from 5.0 to 35 wt.%, or even from 10 to 30 wt.%, of the second monomer having an ethylenically unsaturated group, preferably a second non-polar monomer having an ethylenically unsaturated group; and
d) optionally, from 1 to 20 wt.%, from 1 to 15 wt.%, from 1 to 10 wt.%, from 2.0 to 8.0 wt.%, from 2.5 to 6.0 wt.%, or even from 3.0 to 6.0 wt.% of a tackifying system,
wherein the weight percentages are based on the total weight of the first polymer layer or the third pressure sensitive adhesive layer.

Item 78 is an assembly according to any of item 75 or 76, wherein the first polymer layer and/or the third pressure sensitive adhesive layer have a composition comprising:
a) from 45 to 99 wt.%, or from 60 to 90 wt.%, of a linear or branched alkyl (meth)acrylate ester as first/main monomer, wherein the main monomer is preferably selected from the group consisting of iso-octyl (meth)acrylate, 2-ethylhexyl (meth)acrylate, 2-propylheptyl (meth)acrylate, butyl acrylate;
b) optionally, from 1 to 15 wt.%, from 1 to 12 wt.%, from 1 to 10 wt.%, from 2.0 to 8.0 wt.%, from 2.5 to 6.0 wt.%, or even from 3.0 to 6.0 wt.% of a polar monomer, preferably a polar acrylate;
c) optionally from 1.0 to 40 wt.%, from 3.0 to 40 wt.%, from 5.0 to 35 wt.%, or even from 10 to 30 wt.%, of the second monomer having an ethylenically unsaturated group, preferably a second non-polar monomer having an ethylenically unsaturated group;
d) optionally, from 1 to 20 wt.%, from 1 to 15 wt.%, from 1 to 10 wt.%, from 2.0 to 8.0 wt.%, from 2.5 to 6.0 wt.%, or even from 3.0 to 6.0 wt.% of a tackifying system; and
e) optionally, from 1 to 30 wt.%, from 2 to 25 wt.%, from 2 to 20 wt.%, or even from 3 to 15 wt.%, of silica nanoparticles having an average primary particle size no greater than 400 nm,
wherein the weight percentages are based on the total weight of the first polymer layer or the third pressure sensitive adhesive layer.

Item 79 is an assembly according to any of items 54 to 78, wherein the second pressure sensitive adhesive layer and/or the third pressure sensitive adhesive layer has a thickness no greater than 250 micrometres, no greater than 220 micrometres, no greater than 200 micrometres, no greater than 180 micrometres, no greater than 150 micrometres, no greater than 100 micrometres, no greater than 80 micrometres, no greater than 60 micrometres, no greater than 50 micrometres, or even no greater than 40 micrometres.

Item 80 is an assembly according to any of items 54 to 79, wherein the second pressure sensitive adhesive layer and/or the third pressure sensitive adhesive layer has a thickness in a range from 20 to 250 micrometres, from 30 to 220 micrometres, from 40 to 200 micrometres, from 50 to 200 micrometres, or even from 60 to 180 micrometres.

Item 81 is an assembly according to any of items 54 to 80, wherein the first polymer layer has a thickness greater than 250 micrometres, greater than 300 micrometres, greater than 400 micrometres, greater than 500 micrometres, greater than 600 micrometres, greater than 800 micrometres, or even greater than 1000 micrometres.

Item 82 is an assembly according to any of items 54 to 81, wherein the first polymer layer has a thickness in a range from 250 to 4000 micrometres, from 300 to 3000 micrometres, from 400 to 3000 micrometres, from 500 to 2500 micrometres, from 600 to 2500 micrometres, from 600 to 2000 micrometres, or even from 800 to 2000 micrometres.

Item 83 is an assembly according to any of items 54 to 82, which has an overall light-transmission (resulting from the light-transmission of the overall multilayer assembly), of at least 80%, at least 85% or even at least 90%, relative to visible light, when measured according to ASTM E-1438.

Item 84 is an assembly according to any of items 54 to 83, which has an overall haze (resulting from the haze of the overall multilayer assembly) no greater than 2, no greater than 1.8, no greater than 1.6, no greater than 1.5, no greater than 1.4, or even no greater than 1.2, when measured in the transmissive mode according to ASTM D-1003-95.

Item 85 is an assembly according to any of items 54 to 84, which has a peel adhesion value of more than 15 N/cm, more than 18 N/cm, more than 20 N/cm, more than 22 N/cm, more than 25 N/cm, more than 28 N/cm, more than 30 N/cm, or even more than 32 N/cm, when measured at room temperature on PMMA substrate according to the peel adhesion test method described in the experimental section.

Item 86 is an assembly according to any of items 54 to 85, which has a peel adhesion value of more than 15 N/cm, more than 18 N/cm, more than 20 N/cm, more than 22 N/cm, more than 25 N/cm, more than 28 N/cm, more than 30 N/cm, more than 32 N/cm, or even more than 35 N/cm, when measured at room temperature on polycarbonate substrate according to the peel adhesion test method described in the experimental section.

Item 87 is an assembly according to any of items 54 to 86, which has a peel adhesion value of more than 15 N/cm, more than 18 N/cm, more than 20 N/cm, more than 22 N/cm, more than 25 N/cm, more than 28 N/cm, more than 30 N/cm, more than 32 N/cm, or even more than 35 N/cm, when measured at room temperature on ABS substrate according to the peel adhesion test method described in the experimental section.

Item 88 is an article comprising a medium surface energy substrate and a pressure sensitive adhesive composition or a multilayer pressure sensitive adhesive assembly according to any of the preceding items adjacent to the medium surface energy substrate.

Item 89 is an article according to item 88, wherein the medium surface energy substrate has a light-transmission of at least 80%, at least 85% or even at least 90%, relative to visible light, when measured according to ASTM E-1438.

Item 90 is an article according to any of item 88 or 89, wherein the medium surface energy substrate is selected from the group consisting of polymethyl methacrylate (PMMA), acrylonitrile butadiene styrene (ABS), polyamide 6 (PA6), PC/ABS blends, PC, PVC, PA, PUR, TPE, POM, polystyrene, composite materials, in particular fibre reinforced plastics; and any combinations thereof.

Item 91 is an article according to any of items 88 to 90, wherein the medium surface energy substrate is selected from the group consisting of PMMA, ABS, and any combinations thereof.

Item 92 is an article according to any of items 88 to 91, which has a light-transmission of at least 80%, at least 85% or even at least 90%, relative to visible light, when measured according to ASTM E-1438.

Item 93 is a method of manufacturing a pressure sensitive adhesive composition according to any of items 1 to 53, which comprises the steps of:
a) providing the (meth)acrylate-based copolymeric additive;
b) incorporating the (meth)acrylate-based copolymeric additive into a curable precursor composition comprising the main monomer units used to prepare the (meth)acrylate-based (co)polymer base component, optionally a polymerization initiator, optionally a crosslinker, thereby forming a curable precursor composition of the pressure sensitive composition; and
c) optionally, curing the curable precursor composition of the pressure sensitive composition obtained in step b), preferably with actinic radiation.

Item 94 is a method according to item 93, wherein the (meth)acrylate-based copolymeric additive of step a) is obtained by free-radical polymerization, in particular by an essentially solventless polymerization method, more in particular by an essentially adiabatic polymerization reaction.

Item 95 is a method according to any of item 93 or 94, wherein the (meth)acrylate-based copolymeric additive of step a) is obtained as a pre-polymer composition having a polymer conversion rate greater than 10%, greater than 15%, greater than 20%, greater than 25%, greater than 30%, greater than 35%, greater than 40%, or even greater than 45%.

Item 96 is a method according to any of items 93 to 95, wherein the (meth)acrylate-based copolymeric additive of step a) is obtained as a pre-polymer composition having a polymer conversion rate comprised between 10 and 60%, between 20 and 55%, between 30 and 50%, or even between 35 and 50%.

Item 97 is a method of manufacturing a multilayer pressure sensitive adhesive assembly according to any of items 54 to 87, which comprises the steps of:
a) providing a precursor composition of the first polymer layer;
b) providing a precursor composition of the second pressure sensitive adhesive layer;
c) coating the precursor composition of the first polymer layer on a substrate, and optionally, curing the precursor composition of the first polymer layer; and
d) coating the precursor composition of the second pressure sensitive adhesive layer on the precursor composition of the first polymer layer obtained in step c) and optionally, curing the precursor composition of second first pressure sensitive adhesive layer, thereby forming a precursor of the multilayer pressure sensitive adhesive assembly; and
e) optionally, curing the precursor of the multilayer pressure sensitive adhesive assembly obtained in step d).

Item 98 is a method according to item 97, whereby a liquid precursor of the first polymer layer is deposited on a substrate and then cured, preferably with actinic radiation, in particular UV radiation, e-beam radiation or by thermal curing.

Item 99 is a method according to item 98, whereby a liquid precursor of a second pressure sensitive adhesive layer and/or a third pressure sensitive adhesive layer is superimposed on the liquid precursor of the first polymer layer before curing.

Item 100 is a method of manufacturing a multilayer pressure sensitive adhesive assembly according to any of items 54 to 87, whereby the multilayer pressure sensitive adhesive assembly is produced by hotmelt (co-)extrusion, solvent-based methods or any combinations thereof.

Item 101 is a method of manufacturing a multilayer pressure sensitive adhesive assembly according to any of items 54 to 87, whereby the first polymer layer and/or the second pressure sensitive adhesive layer and/or the third pressure sensitive adhesive layer are prepared separately and subsequently laminated to each other.

Item 102 is the use of a pressure sensitive adhesive composition or a multilayer pressure sensitive adhesive assembly according to any of items 1 to 87 for the bonding to a medium surface energy substrate or a high surface energy substrate, in particular, a medium surface energy substrate.

Item 103 is the use according to item 102, wherein the medium surface energy substrate has a light-transmission of at least 80%, at least 85% or even at least 90%, relative to visible light, when measured according to ASTM E-1438.

Item 104 is the use according to any of item 102 or 103, wherein the medium surface energy substrate is selected from the group consisting of polymethyl methacrylate (PMMA), acrylonitrile butadiene styrene (ABS), polyamide 6 (PA6), PC/ABS blends, PC, PVC, PA, PUR, TPE, POM, polystyrene, composite materials, in particular fibre reinforced plastics; and any combinations thereof.

Item 105 is the use according to any of items 102 to 104, wherein the medium surface energy substrate is selected from the group consisting of PMMA, ABS, polycarbonate (PC), and any combinations thereof.

### EXAMPLES

The present disclosure is further illustrated by the following examples. These examples are merely for illustrative purposes only and are not meant to be limiting on the scope of the appended claims.

### Test Methods applied:

### 90°-Peel-test at 300 mm/min (according to Test Method, Finat No. 2, 8^{th} edition 2009)

Multilayer pressure sensitive adhesive assembly strips according to the present disclosure and having a width of 12.7 mm and a length > 120 mm are cut out in the machine direction from the sample material. For test sample preparation the liner is first removed from the one adhesive side and placed on an aluminum strip having the following dimension 22 x 1.6 cm, 0.13 mm thickness. Then, the adhesive coated side of each PSA assembly strip is placed, after the liner is removed, with its adhesive side down on a clean test panel using light finger pressure. Next, the test samples are rolled twice in each direction with a standard FINAT test roller (weight 6.8 kg) at a speed of approximately 10 mm per second to obtain intimate contact between the adhesive mass and the surface. After applying the pressure sensitive adhesive assembly strips to the test panel, the test samples are allowed to dwell at ambient room temperature (23°C +/- 2°C, 50% relative humidity +/-5%) for 72 hours prior to testing. For peel testing the test samples are in a first step clamped in the lower movable jaw of a Zwick tensile tester (Model Z005 commercially available from Zwick/Roell GmbH, Ulm, Germany). The multilayer pressure sensitive adhesive film strips are folded back at an angle of 90° and their free ends grasped in the upper jaw of the tensile tester in a configuration commonly utilized for 90° measurements. The tensile tester is set at 300 mm per minute jaw separation rate. Test results are expressed in Newton per 10 mm (N/10 mm). The quoted peel values are the average of two 90°-peel measurements.

### Average particle size

The average particle size of the silica nanoparticles may be determined by Dynamic Light Scattering (DLS) techniques according to test method ISO 22412:2008(EN).

### Weight Average Molecular Weight measurement (M_{w}) and Number Average Molecular Weight measurement (Mₙ)

The weight average molecular weight and number average molecular weight of the polymers are determined using conventional gel permeation chromatography (GPC). The GPC apparatus obtained from Waters, include a high-pressure liquid chromatography pump (Model 600E), an auto-sampler (Model 712 WISP), and a refractive index detector (Model 2414). The chromatograph is equipped with three Mixed Bed type B (10µm particle) columns 300 x 7.5 mm from Agilent.

Polymeric solutions for testing are prepared by dissolving a polymer in 1ml tetrahydrofuran at a concentration of 0.3% polymer by weight. 300 µl etheral alcoholic diazomethane solution (0.4 mol/l) is added and the sample is kept for 60 minutes at room temperature. The sample is then blown to dryness under a stream of nitrogen at room temperature. The dried sample is dissolved in THF, containing 0.1% toluene, to yield a 0.1% w/v solution. The solution is then filtered through a 0.45 micron polytetrafluoroethylene filter. 100 µl of the resulting solution is injected into the GPC and eluted at a rate of 1.00 milliliter per minute through the columns maintained at 40°C. Toluene is used as a flow rate marker. The system is calibrated with polystyrene standards (10 standards, divided in 3 solutions in the range between 470 Da and 7300000 Da) using a 3rd order regression analysis to establish a calibration curve. The weight average molecular weight (Mw) is calculated for each sample from the calibration curve.

### Test Substrates used for testing:

The pressure sensitive adhesive compositions and assemblies according to the present disclosure are tested for their adhesive properties on following substrates:
- Steel: Stainless Steel (SS) plate ("Edelstahl 1.4301 IIID", 150 mm x 50 mm x 2 mm), available from Rocholl GmbH, Aglatershausen, Germany. Prior to testing, the substrates are first cleaned with MEK and n-heptane, dried with a tissue, and then cleaned with MEK and dried with a tissue.
- PMMA (Poly methyl methacrylate) test panels (150 mm x 25 mm x 2 mm), available from Rocholl GmbH, Aglatershausen, Germany. Prior to testing, these test panels are cleaned with a 1:1 mixture of isopropylalcohol and distilled water and rubbed dry with a paper tissue after cleaning.
- ABS (Acrylonitrile butadiene styrene) test panels (Metzoplast ABS/G, 150 mm x 25 mm x 2 mm), available from Rocholl GmbH, Aglatershausen, Germany. Prior to testing, these test panels are cleaned with a 1:1 mixture of isopropylalcohol and distilled water and rubbed dry with a paper tissue after cleaning.
- PC (Polycarbonate) test panels (150 mm x 25 mm x 2 mm), available from Rocholl GmbH, Aglatershausen, Germany. Prior to testing, these test panels are cleaned with n-heptane and rubbed dry with a paper tissue after cleaning.

### Raw materials used:

In the examples, the following raw materials and commercial adhesive tapes used are used:
**2-Ethylhexylacrylate** (2-EHA, C8-acrylate) is an ester of 2-ethylalcohol and acrylic acid which is obtained from BASF AG, Germany.
**Methylmethacrylate** (MMA) is commercially available from Evonik, Germany.
**Acrylic acid** (AA) is obtained from BASF AG, Germany.
**Isooctyl thioglycolate** (IOTG) is a chain transfer agent and commercially available by Bruno Bock Chemische Fabrik, Germany.
**Omnirad BDK** (2,2-dimethoxy-2-phenylacetophenone) is a UV-initiator and is available from iGm resins, Waalwijk Netherlands.
**Irgacure 651** is a photoinitiator available from BASF, Germany.
**1,6-Hexanedioldiacrylate** (HDDA) is a fast curing diacrylate and is obtained from BASF AG, Germany.
**HTGO** is a high Tg acrylic oligomer having a M_{w} of 25.000 g/mol, used as 50wt.% dilution in 2-PHA) and prepared according to the procedure described in EP-A1-2803712 (Wieneke et al.) for the copolymer referred to as HTG-1d.
**3M Clear VHB 4910 Tape** is an acrylic foam tape having a thickness of 1000 micrometres, commercially available from the 3M Company, USA.

### Preparation of the second (meth)acrylate copolymer:

Before preparing the precursors used for the pressure sensitive adhesive compositions and the second pressure sensitive adhesive polymeric layers, the (meth)acrylate-based copolymeric additives, hereinafter referred to as Polymer 1 and Polymer 2 (comparative polymer not comprising a monomer unit having functional groups) having the compositions (in pph) as shown in Table 1, are prepared as detailed below.

**Table 1**

| | **Polymer 1** | **Polymer 2 comparative** |
|---|---|---|
| 2-Ethylhexylacrylate (2-EHA) | 58 | 75 |
| Methylmethacrylate (MMA) | 35 | 25 |
| Acrylic acid (AA) | 7 | - |
| DMAEMA | - | - |
| Isooctyl thioglycolate (IOTG) | 0.7 | 0.7 |
| Omnirad BDK | 1.0 | 1.0 |

The polymerization of various monomers as above described for the preparation of the (meth)acrylate-based copolymeric additives is carried out by bulk polymerization under UV light sealed in ethylene vinyl acetate film pouches as described in U.S. Patent No. 6,294,249 (Hamer et al.). Two sheets of 2.5 mil (51 micrometer) thick ethylene vinyl acetate, commercially available as VA-24 from Pliant Corp. of Evansville, IN, are heat sealed on the lateral edges and the bottom to form a rectangular pouch on a liquid form, fill, and seal machine. The pouches are filled with the pre-adhesive described in Table 1. The filled packages are then heat sealed at the top in the cross direction through the monomer to form individual pouches measuring 13.4 cm by 4.3 cm by about 0.4 cm thick containing 25 grams of the pre-adhesive compositions. The pouches are placed in a water bath that is maintained between about 16°C and 32°C and exposed to ultraviolet radiation (supplied by lamps having about 90 percent of the emissions between 300 and 400 nanometers (nm), and a peak emission at 351 nm) at an intensity of 4.55 mW/cm² for 20 minutes.

Polymer 1 has a weight average molecular weight (M_{w}) of about 39,800 Daltons, a number average molecular weight (Mₙ) of about 19,800 Daltons, a molecular weight distribution (M_{w}/Mₙ) of about 2 and a Tg of about -6 as estimated by the Fox equation.

### Preparation of the precursors of the first polymer layers (core layers):

The precursors of the first polymer compositions and the corresponding first polymer layers (core layers), hereinafter referred to as PL 1 and PL 2, are prepared by combining the C8 acrylate (2-EHA) and the acrylic acid (between 5 and 10 wt.%) with 0.04 pph of Irgacure as a photoinitiator in a glass vessel. Before the UV exposure is initiated, the mixture is flushed 10 minutes with nitrogen and nitrogen is also bubbled into the mixture the whole time until the polymerization process is stopped by adding air to the syrup. All the time, the mixture is stirred with a propeller stirrer (300 U/min) and the reaction is stopped when a viscosity comprised between 2000 and 4500 mPas is reached (when measured with a Brookfield viscosimeter, T = 23°C, spindle 4, 12 rpm). Additionally, the remaining amount of Irgacure and the HDDA crosslinker are added to the composition and mixed until they have dissolved / dispersed. The exact formulations of the polymerization precursor compositions for the first polymer layers PL 1 and PL 2 are listed (in pph) in Table 2 below.

**Table 2**

| | 2-EHA | AA | HDDA | Irgacure |
|---|---|---|---|---|
| PL 1 | 95 | 5 | 0.10 | 0.20 |
| PL 2 | 92.5 | 7.5 | 0.10 | 0.20 |

### Preparation of the precursors of the second pressure sensitive adhesive layers (skin layers):

The precursors of the second pressure sensitive adhesive layers (skin layers), hereinafter referred to as CSL 1-3 (comparative) and SL 4, are prepared by first the (meth)acrylate-based copolymeric additives as above-described in a polymerization precursor composition comprising the C8 acrylate (2-EHA) and the acrylic acid with 0.04 pph of Irgacure as a photoinitiator in a glass vessel. Before the UV exposure is initiated, the mixture is flushed 10 minutes with nitrogen and nitrogen is also bubbled into the mixture the whole time until the polymerization process is stopped by adding air to the syrup. All the time, the mixture is stirred with a propeller stirrer (300 U/min) and the reaction is stopped when a viscosity comprised between 2000 and 4500 mPas is reached (when measured with a Brookfield viscosimeter, T = 25 °C, spindle 4, 12 rpm). Additionally, the remaining amount of Irgacure, the HDDA crosslinker, and optionally, the HTGO oligomer (if present) are added to the composition and mixed until they have dissolved/dispersed. The HTGO is added as a dilution in 2-EHA. The exact formulation of the polymerization precursor compositions for the second pressure sensitive adhesive layers CSL 1-3 and SL 4-5 are listed (in pph) in Table 3 below. Comparative skin layer CS L1 does not comprise any (meth)acrylate-based copolymeric additive according to the disclosure. Comparative skin layer CSL 2 comprises a (meth)acrylate-based copolymeric additive not according to the disclosure (i.e. not comprising a monomer unit having functional groups). Comparative skin layer CSL 3 comprises a (meth)acrylate-based copolymeric additive not according to the disclosure (i.e. not comprising methacrylic acid ester monomer units).

**Table 3**

| | CSL 1 | CSL 2 | CSL 3 | SL 4 |
|---|---|---|---|---|
| 2-EHA | 95 | 95 | 92.5 | 95 |
| AA | 5 | 5 | 7.5 | 5 |
| Polymer 1 | - | - | - | 10 |
| Polymer 2 | - | 10 | - | - |
| HTGO | - | - | 5 | - |
| HDDA | 0.10 | 0.10 | 0.10 | 0.10 |
| Irgacure | 0.20 | 0.20 | 0.20 | 0.20 |

### Preparation of the multilayer pressure sensitive adhesive assemblies for Ex.1 to Ex.6

The precursors of the pressure sensitive adhesive layer skins and of the core layers, are superimposed onto each other in a coater, according to the method described in WO-A1-2011094385 (Hitschmann et al.). Hereby, the liquid precursors of the pressure sensitive adhesive skin layers are coated on both sides of the core layers. The knife height setting is 130-140 micrometers for the first and third knife (for the pressure sensitive adhesive skin layers) and 1240-1250 micrometers for the second knife (for the core layers), both levels calculated from the substrate surface. Curing is accomplished from both top and bottom side in a UV-curing station with a length of 300 cm at the line speed set to 0.82 m/min. The total radiation intensity irradiated cumulatively from top and bottom is approximately 3 mW/cm². The resulting multilayer pressure sensitive adhesive assemblies have a core layer with a thickness of about 800 micrometers and two skin layers with a thickness of about 100 micrometers (2 x 100 micrometers). When the pressure sensitive adhesive assembly does not comprise any skin layers, the core layer has a thickness of about 1000 micrometers.

### Examples used for testing

The tested examples are listed in Table 4 below.

Examples 1 is according to the disclosure. Examples 2 to 5 are comparative examples. Example 5 features a monolayer acrylic tape not according to the disclosure.

**Table 4**

| Example No. | Core layer used | Skin layer used |
|---|---|---|
| Ex.1 | PL 1 | SL4 |
| Ex.2 | PL 1 | CSL 1 |
| Ex.3 | PL 1 | CSL 2 |
| Ex.4 | PL 2 | CSL 3 |
| Ex.5 | VHB 4910 | - |

### Test Results

### 90°Peel on various substrate test plates (72h, room temperature)

Table 5 shows the 90° peel values of the multilayer pressure sensitive adhesive assemblies according to Ex.1 to Ex.5 after 72h dwell time at room temperature (RT) on various substrates.

**Table 5**

| Example | Peel value on PMMA (N/cm) | Peel value on ABS (N/cm) | Peel value on PC (N/cm) |
|---|---|---|---|
| Ex.1 | 34 | 37 | 36 |
| Ex.2 | 21 | 17 | 23 |
| Ex.3 | 9 | 10 | 12 |
| Ex.4 | 25 | 21 | 20 |
| Ex.5 | 22 | 19 | 17 |

Table 5 shows the improved peel adhesion performance obtained with multilayer pressure sensitive adhesive assemblies according to the disclosure (Example 1) on various substrates, when compared to comparative pressure sensitive adhesive assemblies not according to the disclosure (Examples 2 to 5).

## Claims

1. A pressure sensitive adhesive composition comprising a blend of:
a) a (meth)acrylate-based (co)polymer base component; and
b) a (meth)acrylate-based copolymeric additive comprising the free-radical random copolymerization reaction product of a copolymerizable material comprising:
i. (low Tg) C₁-C₃₂ acrylic acid ester monomer units;
ii. greater than 10 wt.% of (high Tg) C₁-C₁₈ methacrylic acid ester monomer units, based on the total weight of the (meth)acrylate copolymeric additive; and
iii. (high Tg) ethylenically unsaturated monomer units having a functional group, which are copolymerizable with monomer units (i) and/or (ii);
wherein the (meth)acrylate-based copolymeric additive has a weight average molecular weight (M_{w}) greater than 10,000 Daltons and a Tg no greater than 50°C, as estimated by the Fox equation.

2. A composition according to claim 1, wherein the (meth)acrylate-based copolymeric additive comprising the free-radical random copolymerization reaction product of a copolymerizable material comprises greater than 12 wt.%, greater than 15 wt.%, greater than 18 wt.%, greater than 20 wt.%, greater than 22 wt.%, greater than 25 wt.%, greater than 28 wt.%, greater than 30 wt.%, greater than 32 wt.%, greater than 35 wt.%, greater than 40 wt.%, greater than 45 wt.%, greater than 50 wt.%, greater than 55 wt.%, greater than 60 wt.%, or even greater than 65 wt.%, of the C₁-C₁₈ methacrylic acid ester monomer units, based on the total weight of the (meth)acrylate copolymeric additive.

3. A composition according to any of claim 1 or 2, wherein the C₁-C₁₈ methacrylic acid ester monomer units are selected from the group consisting of methyl methacrylate, ethyl methacrylate, propyl methacrylate, n-butyl methacrylate, t-butyl methacrylate, isobutyl methacrylate, n-hexyl methacrylate, tetrahydrofurfuryl methacrylate, cyclohexyl methacrylate, 3,3,5-trimethylcyclohexyl methacrylate, tert-butyl cyclohexyl methacrylate, heptyl methacrylate, cycloheptyl methacrylate, 2-ethyhexyl methacrylate, n-octyl methacrylate, 2-phenoxy ethyl methacrylate, nonyl methacrylate, decyl methacrylate, lauryl methacrylate, isobornyl methacrylate, phenyl methacrylate, benzyl methacrylate, and any mixtures thereof.

4. A composition according to any of the preceding claims, wherein the ethylenically unsaturated monomer units having a functional group have a functional group selected from the group consisting of acid, amine, hydroxyl, amide, isocyanate, acid anhydride, epoxide, nitrile, and any combinations thereof.

5. A composition according to any of the preceding claims, wherein the (meth)acrylate-based copolymeric additive has a Tg no greater than 45°C, no greater than 40°C, no greater than 35°C, no greater than 30°C, no greater than 25°C, no greater than 20°C, no greater than 10°C, no greater than 0°C, or even no greater than -5°C, as estimated by the Fox equation.

6. A composition according to any of the preceding claims, wherein the (meth)acrylate-based copolymeric additive has a weight average molecular weight (M_{w}) greater than 12,000 Daltons, greater than 15,000 Daltons, greater than 20,000 Daltons, greater than 25,000 Daltons, greater than 30,000 Daltons, greater than 35,000 Daltons, or even greater than 40,000 Daltons.

7. A composition according to any of the preceding claims, wherein the (meth)acrylate-based copolymeric additive is a random copolymer which is free of block copolymers and/or free of copolymer blocks, in particular copolymer blocks resulting exclusively from the copolymerization of (high Tg) C₁-C₁₈ methacrylic acid ester monomer units.

8. A composition according to any of the preceding claims, which comprises a blend of:
a) at least 60 wt.%, at least 65 wt.%, at least 70 wt.%, at least 75 wt.%, at least 80 wt.%, at least 85 wt.%, or even at least 90 wt.%, of the (meth)acrylate-based (co)polymer base component; and
b) up to 40 wt.%, up to 35 wt.%, up to 30 wt.%, up to 25 wt.%, up to 20 wt.%, up to 15 wt.%, or even up to 10 wt.%, of the (meth)acrylate-based copolymeric additive, based on the total weight of the pressure sensitive adhesive composition.

9. A composition according to any of the preceding claims, which comprises silica nanoparticles having an average particle size no greater than 400 nm, when measured by Dynamic Light Scattering (DLS) techniques according to test method described in the experimental section.

10. A multilayer pressure sensitive adhesive assembly comprising at least a first polymer layer and a second pressure sensitive adhesive layer adjacent to the first polymer layer, wherein the second pressure sensitive adhesive layer has a composition as described in any of claims 1 to 9.

11. An assembly according to claim 10, which has an overall light-transmission, of at least 80%, at least 85% or even at least 90%, relative to visible light, when measured according to ASTM E-1438.

12. An article comprising a medium surface energy substrate and a pressure sensitive adhesive composition or a multilayer pressure sensitive adhesive assembly according to any of the preceding claims adjacent to the medium surface energy substrate.

13. A method of manufacturing a pressure sensitive adhesive composition according to any of claims 1 to 9, which comprises the steps of:
a) providing the (meth)acrylate-based copolymeric additive;
b) incorporating the (meth)acrylate-based copolymeric additive into a curable precursor composition comprising the main monomer units used to prepare the (meth)acrylate-based (co)polymer base component, optionally a polymerization initiator, optionally a crosslinker, thereby forming a curable precursor composition of the pressure sensitive composition; and
c) optionally, curing the curable precursor composition of the pressure sensitive composition obtained in step b), preferably with actinic radiation.

14. A method of manufacturing a multilayer pressure sensitive adhesive assembly according to any of claim 10 or 11, which comprises the steps of:
a) providing a precursor composition of the first polymer layer;
b) providing a precursor composition of the second pressure sensitive adhesive layer;
c) coating the precursor composition of the first polymer layer on a substrate, and optionally, curing the precursor composition of the first polymer layer; and
d) coating the precursor composition of the second pressure sensitive adhesive layer on the precursor composition of the first polymer layer obtained in step c) and optionally, curing the precursor composition of second first pressure sensitive adhesive layer, thereby forming a precursor of the multilayer pressure sensitive adhesive assembly; and
e) optionally, curing the precursor of the multilayer pressure sensitive adhesive assembly obtained in step d).

15. Use of a pressure sensitive adhesive composition or a multilayer pressure sensitive adhesive assembly according to any of claims 1 to 11 for the bonding to a medium surface energy substrate or a high surface energy substrate, in particular, a medium surface energy substrate.
